(19) Europäisches Patentamt

European Patent Office

Office européen des brevets

(11) **EP 4 654 621 A1**

(12) **EUROPEAN PATENT APPLICATION**
published in accordance with Art. 153(4) EPC

(43) Date of publication:
26.11.2025 Bulletin 2025/48

(21) Application number: 24771041.1

(22) Date of filing: 11.01.2024

(51) International Patent Classification (IPC):
H04W 4/02 (2018.01)    H04W 64/00 (2009.01)
H04W 76/10 (2018.01)    G01S 19/13 (2010.01)
H04W 84/06 (2009.01)    G01B 21/22 (2006.01)

(52) Cooperative Patent Classification (CPC):
G01B 21/22; G01S 19/13; H04W 4/02;
H04W 64/00; H04W 76/10; H04W 84/06

(86) International application number:
PCT/KR2024/000566

(87) International publication number:
WO 2024/191039 (19.09.2024 Gazette 2024/38)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 13.03.2023 KR 20230032395
27.04.2023 KR 20230055820

(71) Applicant: Samsung Electronics Co., Ltd.
Suwon-si, Gyeonggi-do 16677 (KR)

(72) Inventors:
• KWON, Dongki
  Suwon-si Gyeonggi-do 16677 (KR)

• KIM, Yein
  Suwon-si Gyeonggi-do 16677 (KR)
• KIM, Hyunil
  Suwon-si Gyeonggi-do 16677 (KR)
• PARK, Sungmin
  Suwon-si Gyeonggi-do 16677 (KR)
• LEE, Junghun
  Suwon-si Gyeonggi-do 16677 (KR)
• HAN, Yonggil
  Suwon-si Gyeonggi-do 16677 (KR)

(74) Representative: Gulde & Partner
Patent- und Rechtsanwaltskanzlei mbB
Berliner Freiheit 2
10785 Berlin (DE)

(54) **ELECTRONIC DEVICE AND METHOD FOR PROVIDING SATELLITE COMMUNICATION CONNECTION**

(57)    According to embodiments, an electronic device is provided. This electronic device comprises: an antenna; a memory storing instructions; a display; and at least one processor. The instructions may, when executed by the at least one processor, cause the electronic device to: execute an application related to satellites; display, within a display area of the application, an antenna indicator indicating a reference range of an antenna direction of the electronic device; obtain azimuth information and elevation angle information, the azimuth information being about a relative direction of the satellite with respect to the antenna direction of the electronic device; and display a satellite indicator on a horizontal location corresponding to the azimuth information and a vertical location corresponding to the elevation angle information within the display area, the satellite indicator indicating the relative direction of the satellite. The satellite indicator may move with respect to the antenna indicator according to a change in direction of the electronic device.

FIG. 3

**Description**

**[Technical Field]**

The disclosure relates to an electronic device and a method for providing a satellite communication connection.

**[Background Art]**

Satellite communication services may be provided via communication satellites. Unlike 4th generation (4G) network or 5th generation (5G) network systems where wireless communications are performed via base stations, a satellite communication may be performed via a communication satellite, and therefore, the satellite communication service may be performed without being limited to a geographical location.

The above information may be presented as related art only to assist with an understanding of the present disclosure. No determination has been made, and no assertion is made, as to whether any of the aforementioned might be applicable as a prior art with regard to the disclosure.

**[Disclosure]**

**[Technical Solution]**

According to an example embodiment, an electronic device may comprise: a display and at least one processor. One or more of the at least one processor may be configured to obtain, based on execution of an application for transmitting a message to a satellite, location information of the satellite, location information of the electronic device, and direction information of the electronic device. One or more of the at least one processor may be configured to identify direction information of the satellite according to the location information of the electronic device and the location information of the satellite. One or more of the at least one processor may be configured to, based on a difference between the direction information of the electronic device and the direction information of the satellite being out of a reference range, display a first indicator in a first state to indicate a position of the satellite on the display. One or more of the at least one processor may be configured to, based on the difference between the direction information of the electronic device and the direction information of the satellite being within the reference range, display on the display the first indicator in a second state different from the first state. One or more of the at least one processor may be configured to display on the display a second indicator for guiding a direction of the electronic device. One or more of the at least one processor may be configured to identify the second indicator overlapped with the first indicator on a screen displayed through the display, in response to a change in the direction of the electronic device. One or more of the at least one processor may be configured to, based on identifying the second indicator overlapped with the first indicator on the screen, display information for notifying that a communication with the satellite is available, on the display. The direction information of the satellite may comprise height information of the satellite and distance information of the satellite.

According to an example embodiment, an electronic device may comprise: a display and at least one processor. One or more of the at least one processor may be configured to obtain, based on execution of an application for a satellite communication, location information of a satellite, location information of the electronic device, and angle information of the electronic device. One or more of the at least one processor may be configured to identify angle information of the satellite based on the location information of the electronic device and the location information of the satellite. One or more of the at least one processor may be configured to, based on a difference between the angle information of the electronic device and the angle information of the satellite being out of a reference range, display a first visual object in a first state on the display to indicate the location of the satellite. One or more of the at least one processor may be configured to, based on the difference between the angle information of the electronic device and the angle information of the satellite being within the reference range, display the first visual object in a second state different from the first state on the display. One or more of the at least one processor may be configured to display on the display a second visual object for guiding an angle of the electronic device. One or more of the at least one processor may be configured to identify the second visual object overlapping the first visual object, in response to a change in the angle of the electronic device. One or more of the at least one processor may be configured to, based on identifying the second visual object overlapping the first visual object, display on the display information for notifying that a communication with the satellite is available. The angle information of the satellite may comprise height information of the satellite and distance information of the satellite. The angle information of the electronic device may comprise height information of the electronic device and distance information of the electronic device.

According to an example embodiment, a method performed by an electronic device may comprise obtaining, based on execution of an application for transmitting a message to a satellite, location information of the satellite, location information of the electronic device, and direction information of the electronic device. The method may comprise identifying direction information of the satellite according to the location information of the electronic device and the location information of the satellite. The method may comprise, based on a difference between the direction information of the electronic device and the direction information of the satellite being out of a reference range, displaying on a display a first indicator in a first state to indicate a location of the satellite. The method may comprise, based on the difference between the direction information of the electronic device and the direction information of the satellite being within the reference range, displaying on the display the first indicator in a second state different from the first state. The method may comprise displaying on the display a second indicator for guiding a direction of the electronic device. The method may comprise identifying the second indicator overlapping the first indicator on a screen displayed through the display, in response to a change in the direction of the electronic device. The method may comprise, based on identifying the second indicator overlapping the first indicator on the screen, displaying on the display information for notifying that a communication with the satellite is available. The direction information of the satellite may comprise height information of the satellite and distance information of the satellite.

According to an example embodiment, an electronic device is provided. The electronic device comprises an antenna, memory storing instructions, a display, and at least one processor. The instructions cause, when executed by the at least one processor, the electronic device to execute an application related to a satellite, display, within a display area of the application, an antenna indicator indicating a reference range of a direction of the antenna of the electronic device, obtain azimuth angle information and elevation angle information for a relative direction of the satellite in respect to the direction of the antenna of the electronic device, display, on a horizontal position corresponding to the azimuth angle information within the display area and a vertical position corresponding to the elevation angle information within the display area, a satellite indicator indicating the relative direction of the satellite, the satellite indicator is moved with respect to the antenna indicator in accordance with change of an orientation of the electronic device. The instructions cause, when executed by the at least one processor, the electronic device to, based on identifying that the relative direction of the satellite is out of the reference range of the direction of the antenna, display a visual object for guiding the orientation of the electronic device while the satellite indicator is displayed outside the antenna indicator, based on identifying that the satellite indicator is displayed on a left side or a right side of the display area, display a visual object for indicating turn-to-left or turn-to-right while the satellite indicator is displayed outside the antenna indicator, and based on identifying that the satellite indicator is displayed on a top side or a bottom side of the display area, display a visual object for indicating tilting up or tilting down while the satellite indicator is displayed outside the antenna indicator.

According to an example embodiment, a non-transitory computer-readable storage medium is provided. The non-transitory computer-readable storage medium stores instructions that, when executed by a processor of an electronic device, cause the electronic device to perform operations comprising, executing an application related to a satellite, displaying, within a display area of the application, an antenna indicator indicating a reference range of a direction of an antenna of the electronic device, obtaining azimuth angle information and elevation angle information for a relative direction of the satellite in respect to the direction of the antenna of the electronic device, displaying, on a horizontal position corresponding to the azimuth angle information within the display area and a vertical position corresponding to the elevation angle information within the display area, a satellite indicator indicating the relative direction of the satellite, wherein the satellite indicator is moved with respect to the antenna indicator in accordance with change of an orientation of the electronic device, based on identifying that the relative direction of the satellite is out of the reference range of the direction of the antenna, displaying a visual object for guiding the orientation of the electronic device while the satellite indicator is displayed outside the antenna indicator, based on identifying that the satellite indicator is displayed on a left side or a right side of the display area, displaying a visual object for indicating turn-to-left or turn-to-right while the satellite indicator is displayed outside the antenna indicator, and based on identifying that the satellite indicator is displayed on a top side or a bottom side of the display area, displaying a visual object for indicating tilting up or tilting down while the satellite indicator is displayed outside the antenna indicator.

According to an example embodiment, an electronic device is provided. The electronic device comprises an antenna, memory storing instructions, a display, and a processor. The instructions, when executed by the processor, cause the electronic device to, obtain, based on execution of an application related to a satellite, an azimuth angle of the satellite and an elevation angle of the satellite, display a visual object for indicating a direction of the antenna according to a first azimuth angle of the antenna and a first elevation angle of the antenna through the display, and display, while the visual object is displayed, a satellite indicator for indicating a direction to the satellite through the display, according to a first position in a first axis within a display area of the application, that is obtained using the azimuth angle of the satellite and the first azimuth angle of the antenna, and a second position in a second axis perpendicular to the first axis within the display area of the application, that is obtained using the elevation angle of the satellite and the first elevation angle of the antenna.

[Description of Drawings]

The above and other aspects, features and advantages of certain embodiments of the present disclosure will be more apparent from the following detailed description, taken in conjunction with the accompanying drawings, in which:

FIG. 1 is a block diagram illustrating an example electronic device in a network environment according to various embodiments;

FIG. 2A is a diagram illustrating examples of a screen for guiding a relative position of a satellite for satellite communication according to various embodiments;

FIG. 2B is a diagram illustrating examples of a screen for guiding a relative position of a satellite for satellite communication according to various embodiments;

FIG. 2C is a diagram illustrating example screens for guiding a relative position of a satellite for satellite communication according to various embodiments;

FIG. 3 is a block diagram illustrating an example configuration of an electronic device according to various embodiments;

FIG. 4 is a diagram illustrating an example of location information of a satellite according to various embodiments;

FIG. 5 is a diagram illustrating an example of location information of an electronic device according to various embodiments;

FIG. 6 is a diagram illustrating an example of wireless communication via a satellite according to various embodiments;

FIG. 7 is a diagram illustrating examples of an indicator display method for guiding movement of an electronic device according to various embodiments;

FIG. 8 is a diagram illustrating examples of a difference according to the types of a plurality of indicators according to various embodiments;

FIG. 9 is a diagram illustrating examples of a visual object corresponding to a satellite according to various embodiments;

FIG. 10 is a diagram illustrating examples of overlapping of indicators according to various embodiments;

FIG. 11 is a diagram illustrating examples of a screen after performing of satellite communication according to various embodiments;

FIG. 12 is a diagram illustrating examples of a guide screen for satellite communication for a plurality of satellites according to various embodiments;

FIG. 13 is a diagram illustrating an example of an operation of an electronic device for identifying a position of an indicator according to various embodiments;

FIG. 14 is a diagram illustrating examples of an indicator state according to a relative position between a satellite and an electronic device according to various embodiments;

FIG. 15 is a signal flow diagram illustrating an example of signaling between a satellite and an electronic device for transmitting a message through a satellite communication application according to various embodiments;

FIG. 16 is a flowchart illustrating an example operation of an electronic device for providing a guide for a relative position between a satellite and an electronic device according to various embodiments; and

FIG. 17 is a flowchart illustrating an example operation of an electronic device for location information of a satellite and location information of an electronic device according to various embodiments.


**[Mode For Carrying Out Invention]**

The terms used in the disclosure are merely used to describe various example embodiments and are not intended to limit the scope of various other embodiments. A singular expression may include a plural expression, unless the context clearly dictates otherwise. The terms used herein, including technical and scientific terms, may have the same meanings as those commonly understood by those skilled in the art to which the disclosure pertains. Terms defined in a general dictionary amongst the terms used in the disclosure may be interpreted as having the same or similar meaning as those in the context of the related art, and they are not to be construed in an ideal or overly formal sense, unless explicitly defined in the disclosure. In some cases, even the terms defined in the disclosure may not be interpreted to exclude embodiments of the disclosure.

In various examples of the disclosure described below, a hardware approach will be described as an example. However, since various embodiments of the disclosure may include a technology that utilizes both the hardware-based approach and the software-based approach, the various embodiments are not intended to exclude the software-based approach.

As used in the following description, terms referring to signaling (e.g., signal, information, message, signaling, etc.), terms referring to direction information (e.g., direction information, angle information, elevation angle information, azimuth information, etc.), terms for operation states (e.g., step, operation, procedure, etc.), terms referring to data (e.g., packet, information, bit, symbol, codeword, etc.), terms referring to visual objects (e.g., visual object, indicators, etc.), terms referring to components of a device or apparatus, and so on used by way of example and only for convenience of description. Therefore, the disclosure is not limited to the terms to be described below, and other terms having the same or equivalent technical meanings may be interchangeably used therefor. Further, as used herein, the terms '~ part', '~ unit', '~ device', '~ body' or the like may refer, for example, to at least one shape structure or a unit for processing a certain function.

Further, throughout the disclosure, an expression such as e.g., 'more than' or 'less than' may be used to determine whether a specific condition is satisfied or fulfilled, but it is merely of a description for expressing an example and is not intended to exclude the meaning of 'more than or equal to' or 'less than or equal to'. A condition described as 'more than or equal to' may be replaced with 'more than', a condition described as 'less than or equal to' may be replaced with 'less than', and a condition described as 'more than or equal to and less than' may be replaced with 'more than and less than or equal to', respectively. Furthermore, hereinafter, 'A' to 'B' may refer to at least one of the elements from A (including A) to B (including B). Hereinafter, 'C' and/or 'D' may refer to including at least one of 'C' or 'D', that is, {'C', 'D', or 'C' and 'D'}.

Hereinafter, various example embodiments disclosed herein will be described with reference to the accompanying drawings. For convenience of illustration, the components shown in the drawings may be exaggerated or reduced in size, and the present disclosure is not necessarily limited as represented therein.

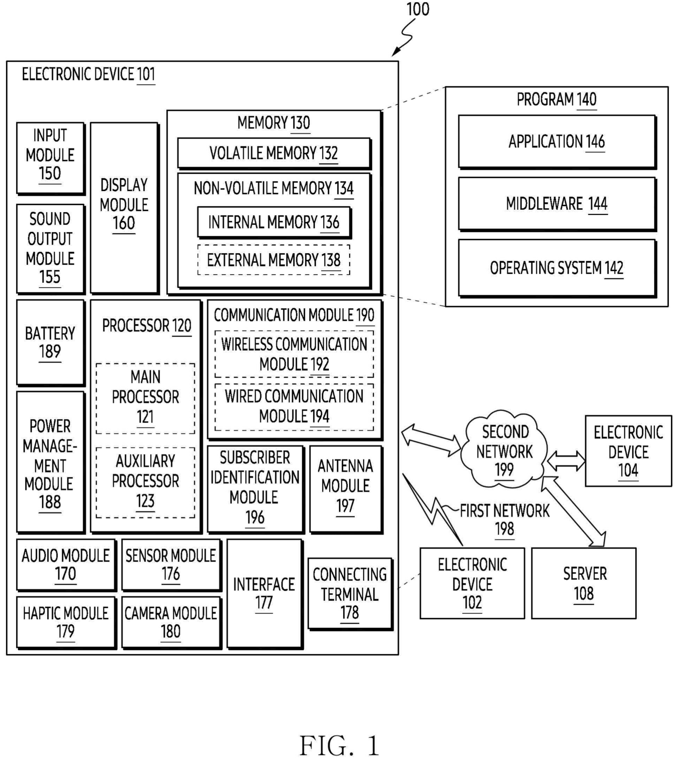

FIG. 1 is a block diagram illustrating an example electronic device in a network environment according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may include various processing circuitry (as used herein, including the claims, the term "processor" may include various processing circuitry, including at least one processor, wherein one or more processors of at least one processor may be configured to perform the various functions described herein) and execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mm Wave band) to address, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another example of the disclosure, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology. The electronic device 101 of FIG. 1 may be referred to the electronic device 101 of FIGS. 1 to 17.

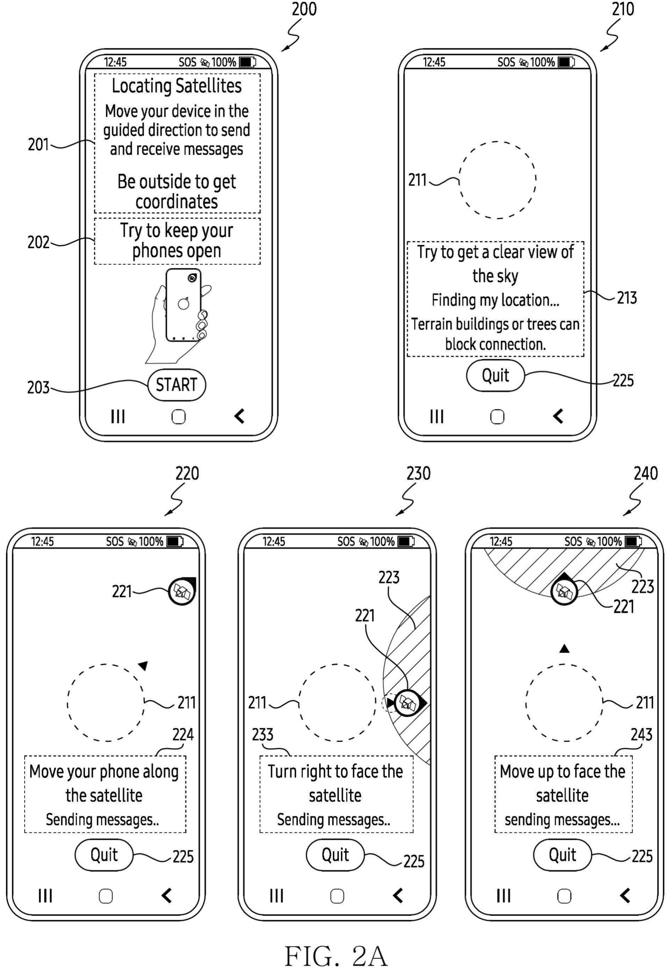

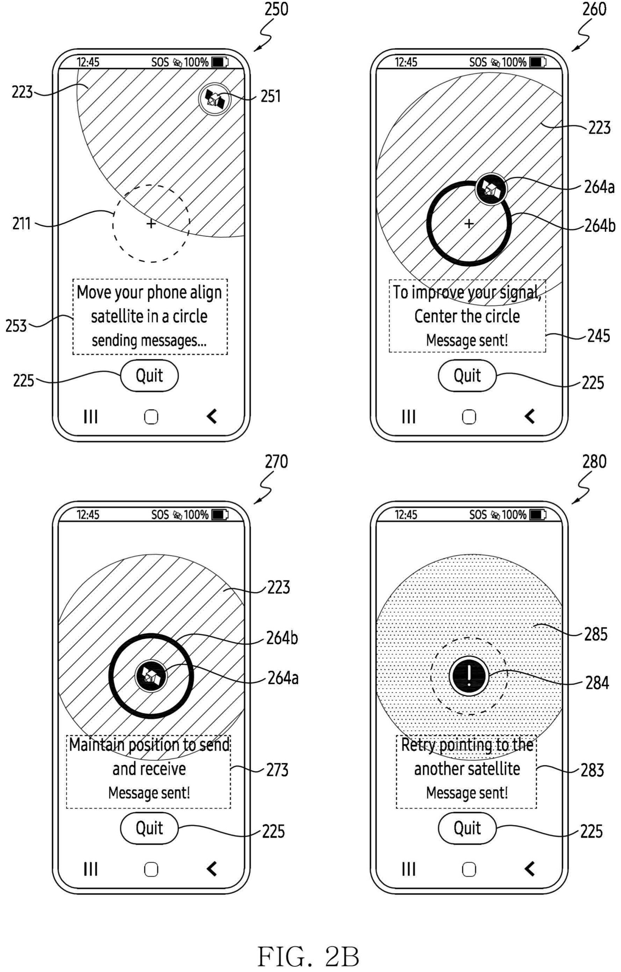

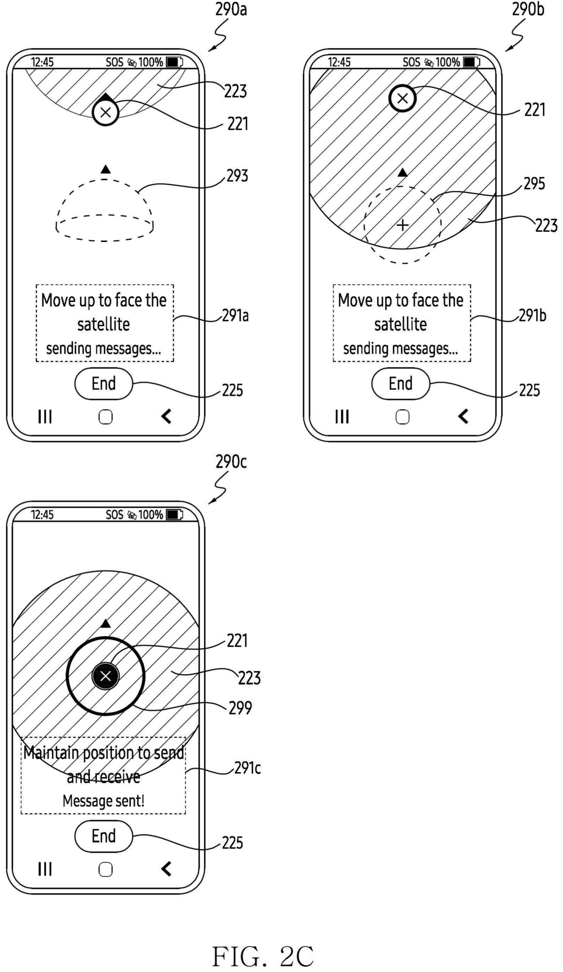

FIGS. 2A, 2B and 2C are diagrams illustrating example screens for guiding a relative location of a satellite for a satellite communication, according to various embodiments. The electronic device 101 of FIG. 1 may perform the operations of the electronic device described with reference to FIGS. 2A, 2B and 2C.

Referring to FIG. 2A, a screen 200, a screen 210, a screen 220, a screen 230, and/or a screen 240 may be displayed on a display (e.g., the display module 160 of FIG. 1) of an electronic device (e.g., the electronic device 101 of FIG. 1). In the screen 200, the electronic device 101 may display text 201, text 202, and a button 203 on the screen 200. In the screen 210, the electronic device 101 may display a second indicator 211, text 213, and a button 225 on the screen 210. In the screen 220, the electronic device 101 may display a first indicator 221, a second indicator 211, text 224, and a button 225 on the screen 220. In the screen 230, the electronic device 101 may display the first indicator 221, the second indicator 211, a visual object 223, text 233, and the button 225 on the screen 230. In the screen 240, the electronic device 101 may display the first indicator 221, the second indicator 211, the visual object 223, text 243, and the button 225 on the screen 240. The first indicator 221 may indicate a location of a satellite. For example, the first indicator 221 may indicate a relationship between a position of the satellite on the electronic device 101 and an actual location of the satellite. The second indicator 211 may include an object (e.g., a circular window) that indicates a direction. For example, the second indicator 211 may indicate an approximate direction of the satellite and a direction to which the electronic device 101 has to move.

According to an embodiment, a user may execute an application for performing satellite communications via the electronic device 101. A satellite communication method may be useful in case where it is difficult for a cellular communication or a network communication requiring a base station to operate, due to a geographical location. That is, in an idle state of a terrestrial network, the electronic device 101 may provide an emergency rescue service, using a connection with a satellite through a communication circuit.

According to an embodiment, a user may enter a message through an application executed by the electronic device 101. For example, the application may include an application related to an emergency situation. The user may enter an emergency message into the electronic device 101. In one example, such an emergency message may be provided once per day. Upon re-connection, the electronic device 101 may provide a screen for guiding a location of the electronic device 101 toward the satellite. The message may include text written by the user as well as information about items specified by the user's input. For example, the electronic device 101 may display a checkbox or a button on the display 160 to allow the user to select one or more items in order to reduce the amount of information transmitted. In an example, the electronic device 101 may display through the display 160 a screen to provide queries to determine an emergency situation, as an SOS survey. Together with the screen, the electronic device 101 may further provide a "skip" button. In an example, the electronic device 101 may obtain information about a user's situation (e.g., distress situation, criminal situation, fire situation) from the user's response for the checkbox and/or the button. In an example, the electronic device 101 may obtain information about a user's request (e.g., a person in need of help) through the user's response to the checkbox and/or button. After all queries have been answered through the buttons and/or the checkboxes, the electronic device 101 may display a start button for guiding a location of the electronic device 101 toward the satellite. Based on the user's input to the start button, the electronic device 101 may display a satellite connection icon.

According to an embodiment, in order to transmit the acquired message, the electronic device 101 may receive location information from the satellite. For example, the location information of the satellite may include information related to latitude, information related to longitude, and/or information related to elevation (altitude). According to an embodiment, the direction information of the satellite identified based on the location information of the satellite may include information related to an azimuth with respect to the satellite and information related to an elevation angle with respect to the satellite. However, the embodiments of the present disclosure may not be limited thereto. The electronic device 101 may obtain the location information of the satellite through a satellite information application. The satellite information application may transfer a location of a neighboring satellite to an application for satellite communication.

According to an embodiment, the electronic device 101 may identify the direction information of the satellite based on location information of the electronic device 101 and location information of the satellite. The electronic device 101 may display an indicator (e.g., the second indicator 211) for guiding the location of the electronic device 101, based on the direction information of the satellite and the direction information of the electronic device 101, on a guide screen displayed on the display 160. Based on the guide screen, the user may change an orientation of the electronic device 101. An antenna (e.g., the antenna module 197 in FIG. 1) of the electronic device 101 may be arranged to face the satellite, by changing the orientation of the electronic device 101. The transmission rate in case where the antenna (e.g., an antenna module) is arranged to face the satellite may be higher than that in case where the antenna is arranged to face away the satellite. According to an embodiment, the electronic device 101 may transmit to the satellite a signal inclusive of the content of the input message.

Hereinafter, description will be made of a screen (e.g., the screen 200 to the screen 280) that is displayed to guide the position of the electronic device 101 so that the antenna is arranged toward the satellite.

According to an embodiment, in the screen 200, the electronic device 101 may execute an application for satellite communication. The application for satellite communication may be referred to as an application for transmitting a message to a satellite. The electronic device 101 may provide a guide for a satellite search function by displaying the text 201. For example, the electronic device 101 may display on the display 160 the text 201 "Move your device in the guided direction to send and receive messages" and/or "Be outside to get coordinates". For example, when the electronic device 101 is a foldable type of electronic device, the electronic device 101 may guide a change in a state of the electronic device 101. For example, the electronic device 101 may display the text 202 "Try to keep your phones open" on the display 160. The electronic device 101 may display on the display 160 a button 203 to initiate a satellite search function of the application for satellite communication. When an input to the button 203 is identified, the electronic device 101 may perform the satellite search function.

According to an embodiment, in the screen 210, the electronic device 101 may display a standby state of the electronic device 101 on the display 160, after executing the application for satellite communication. The standby state may refer to a state of performing an operation for obtaining location information of the satellite and/or location information of the electronic device 101. While displaying the screen 210, according to an embodiment, the electronic device 101 may receive satellite location information from the satellite via a communication circuit (e.g., the communication module 190 of FIG. 1). However, the embodiments of the disclosure may not be limited thereto. According to an embodiment, the electronic device 101 may obtain the location information of the satellite through a satellite information application. According to an embodiment, in the state of displaying the screen 210, the electronic device 101 may identify location information of the electronic device 101. For example, the location information of the electronic device 101 may be obtained based on a location identification application. According to an embodiment, the electronic device 101 may identify direction information of the satellite based on the location information of the electronic device 101 and the location information of the satellite. According to an embodiment, in the state of displaying the screen 210, the electronic device 101 may identify the direction information of the electronic device 101. The direction information of the electronic device 101 may include information related to an elevation angle of the electronic device 101 and information related to an azimuth of the electronic device 101. For example, the direction information (e.g., information related to the elevation angle) of the electronic device 101 may be identified through an acceleration sensor. For example, the direction information (e.g., information related to the azimuth) of the electronic device 101 may be identified through a magnetic sensor. According to an embodiment, in the screen 210, the electronic device 101 may display on the display 160 the text 213 inviting to move the position (e.g., move to a place with few obstacles or move to an outdoor place) in order to increase the possibility of receiving a signal including location information of the electronic device 101 or the satellite. The electronic device 101 may display the text 213 "Try to get a clear view of the sky. Finding my location... Terrain buildings or trees can block connection" on the display 160. In the screen 210, the electronic device 101 may display on the display 160 the button 225 to stop the electronic device search function or the satellite search function.

According to an embodiment, in the screen 220, the electronic device 101 may display a satellite out of a specified range, on the display 160. The specified range may be an angular range in which a satellite may be displayed on the screen of the electronic device 101. The electronic device 101 may indicate the location of the satellite through the first indicator 221. According to an embodiment, in the screen 220, the electronic device 101 may display a second indicator 221 for guiding a direction, on the display 160. In the screen 220, the electronic device 101 may guide a direction of movement of the electronic device 101 to the user, with the text 224. For example, the electronic device 101 may display the text 224 "Move your phone along the satellite" on the display 160. Additionally, the electronic device 101 may display text informing that a message is being transmitted (e.g., sending messages...), on the display 160.

According to an embodiment, in the screen 230, the electronic device 101 may display the first indicator 221 indicating the location of the satellite and the second indicator 211 for guiding the direction, on the display 160. In the screen 230, the electronic device 101 may display a visual object 223 representing a satellite on the display 160. In the screen 230, the electronic device 101 may guide posture or direction of the electronic device 101 to the user, with the text 233. For example, the electronic device 101 may display the text 233 "Turn right to face the satellite" on the display 160. Additionally, the electronic device 101 may display text informing that a message is being transmitted (e.g., sending messages...), on the display 160.

According to an embodiment, in the screen 240, the electronic device 101 may display the first indicator identified based on the direction information of the electronic device 101 and the direction information of the satellite in the screen 240. According to an embodiment, the first indicator 221 may be a visual object for indicating a location of a corresponding satellite. For example, the first indicator 221 may include an icon (e.g., an icon depicting a satellite). However, the embodiments of the disclosure may not be limited thereto.

According to an embodiment, a difference between the direction information of the electronic device 101 and the direction information of the satellite, displaying the screen 240, may be out of a specified range. The first indicator 221 may indicate a certain point other than the display to indicate any satellite out of the specified range. The specified range may refer to an angular range within which any satellite may be displayed on the screen of the electronic device 101.

According to an embodiment, in the screen 240, the electronic device 101 may display the second indicator 211 for guiding the direction of the electronic device 101. According to an embodiment, the second indicator 211 may be a visual object for providing a guide for the direction of the electronic device 101. For example, the second indicator 211 may be displayed together with a shape of a dotted circle and an arrow near the dotted circle. The visual object 223 may be displayed on the display 160 to display the location of the satellite. However, the embodiments of the disclosure may not be limited thereto. According to an embodiment, in the screen 240, the electronic device 101 may display the text 243 "Move up to face the satellite" on the display 160. In the screen 240, the electronic device 101 may display the button 225 to quit the satellite search function, on the display 160. When an input to the button 225 is identified, the electronic device 101 may stop the satellite search function.

Referring to FIG. 2B, a screen 250, a screen 260, a screen 270, and/or a screen 280 may be displayed on the display 160 of the electronic device 101. The electronic device 101 may display text 253, a button 225, a first indicator 251, a second indicator 211, and/or a visual object 223 on the screen 250. The electronic device 101 may display text 245, a button 225, a first indicator 264a, a second indicator 264b, and/or a visual object 223 on the screen 260. The electronic device 101 may display text 273, a button 225, a first indicator 264a, a second indicator 264b, and/or a visual object 223 on the screen 270. The electronic device 101 may display text 283, a button 225, an indicator 284, and/or a visual object 285 on the screen 280.

According to an embodiment, in the screen 250, a difference between the direction information of the electronic device 101 and the direction information of the satellite may be within a specified range. For example, the first indicator 251 corresponding to the satellite may be displayed within the screen 250. The shape of the first indicator 251 when the difference between the direction information of the electronic device 101 and the direction information of the satellite is within the specified range may be different from that of the first indicator 221 when the difference between the direction information of the electronic device 101 and the direction information of the satellite is out of the specified range. For example, when the difference between the direction information of the electronic device 101 and the direction information of the satellite is out of the specified range, the first indicator 221 may be displayed on a periphery within the specified range of the screen (e.g., the screen 260 of FIG. 2A) and may be an icon indicating a point outside the screen. For example, when the difference between the direction information of the electronic device 101 and the direction information of the satellite is within the specified range, the first indicator 251 may be an icon indicating a point in the screen. Further, a portion (e.g., an arrow) for providing a guide for the direction of the electronic device 101 of the second indicator 211 may be deleted from the display 160. Furthermore, when the satellite is displayed on the screen of the electronic device 101, the second indicator 211 may provide a symbol '+' for indicating a center line relative to the satellite, within the circle. The electronic device 101 may display a visual object 223 corresponding to the satellite. The visual object 223 may be displayed on the display 160 to approximately indicate the location of the satellite relative to the electronic device 101. The electronic device 101 may guide the direction of the electronic device 101 by displaying the text 253. The electronic device 101 may display the text 253 "Move your phone align satellite in a circle" on the display 160. In the screen 250, the electronic device 101 may display on the display 160 the button 225 to quit the satellite search function. When an input to the button 225 is identified, the electronic device 101 may stop the satellite search function.

According to an embodiment, in the screen 260, the electronic device 101 may identify the second indicator 264b overlapping the first indicator 264a on the screen 260, due to a change in the direction of the electronic device 101. For example, the electronic device 101 may change the state of the first indicator 264a, based on identifying the second indicator 264b overlapping the first indicator 264a on the screen 260. For example, the state (e.g., a state of transparency, a state of color, a state of shape, or a state of complexity) of the first indicator 264a overlapping the second indicator 264b on the screen 260 may be different from the state (e.g., a state of transparency, a state of color, a state of shape, or a state of complexity) of the first indicator 264a spaced apart from the second indicator 264b on the screen 260. For example, the electronic device 101 may change the state of the second indicator 264b, based on identifying the second indicator 264b overlapping the first indicator 264a on the screen 260. For example, the state (e.g., the state of transparency, color, shape, or complexity) of the second indicator 264b overlapping the first indicator 264a on the screen 260 may be different from the state (e.g., the state of transparency, color, shape, or complexity) of the second indicator 264b spaced apart from the first indicator 264a on the screen 260. The electronic device 101 may display a visual object 223 on the display to indicate an approximate location of the satellite relative to the electronic device 101. According to an embodiment, in the screen 260, the electronic device 101 may display the text 245 "To improve your signal, center the circle" on the display. In the screen 260, the electronic device 101 may display the button 225 to quit the satellite search function, on the display. When an input to the button 225 is identified, the electronic device 101 may stop the satellite search function.

According to an embodiment, in the screen 270, the electronic device 101 may transmit a signal including a message content to the satellite via the communication circuit (e.g., the communication module 190), based on identifying that the difference between the direction information of the electronic device 101 and the direction information of the satellite is within the specified second range. According to an embodiment, the electronic device 101 may visually display on the display 160 the state of the electronic device 101 that is transmitting/receiving a signal, based on a change in the characteristics (such as, e.g., color, whether to rotate, transparency) of the first indicator 264a. According to an embodiment, the electronic device 101 may visually display on the display 160 the state of the electronic device 101 which is transmitting a signal, based on a change in the characteristics (such as, e.g., color, whether to rotate, transparency) of the second indicator 264b. For example, the color of the second indicator 264b may be changed based on a certain period. For example, the second indicator 264b may be displayed to rotate according to a certain period. According to an embodiment, in the screen 270, the electronic device 101 may display the visual object 223 on the display 160 to indicate an approximate location of the satellite. According to an embodiment, in the screen 270, the electronic device 101 may display the text 273 "Maintain position to send and receive" on the display 160. In the screen 270, the electronic device 101 may display the button 225 to quit the satellite search function, on the display 160. When an input to the button 225 is identified, the electronic device 101 may stop the satellite search function.

According to an embodiment, in the screen 280, the electronic device 101 may indicate, through the display 160, a failure of transmission and/or a failure of reception of a message by the satellite communication. The characteristics (e.g., color, size, etc.) of the visual object 285 corresponding to the satellite in the screen 280 may be different from the characteristics (e.g., color, size, etc.) of the visual object 223 corresponding to the satellite while the satellite communication is attempted. According to an embodiment, the electronic device 101 may represent a failure of transmission and/or a failure of reception of the message by displaying the indicator 284 on the display 160. According to an embodiment, in the screen 280, the electronic device 101 may display the text 283 "Retry pointing to the another satellite" on the display 160. In the screen 280, the electronic device 101 may display the button 225 to quit the satellite search function on the display 160. When an input to the button 225 is identified, the electronic device 101 may stop the satellite search function.

According to an embodiment, the direction information of the satellite may be referred to as angle information of the satellite. The direction information of the satellite may include height information of the satellite and distance information of the satellite. The height information of the satellite may include elevation angle information of the satellite. The distance information of the satellite may include azimuth information of the satellite.

Referring to FIG. 2C, a screen 290a, a screen 290b, and/or a screen 290c may be displayed on the display 160 of the electronic device 101.

In the screen 290a, the electronic device 101 may display a first indicator 221 indicating the direction of the satellite and a visual object 223 for the satellite. In the screen 290a, the electronic device 101 may guide a direction of movement of the electronic device 101 by displaying text 291a. For example, the electronic device 101 may display the text 291a "Move up to face the satellite" on the display 160. According to an embodiment, the electronic device 101 may display a second indicator 293 to indicate an approximate direction of the satellite and a direction in which the electronic device 101 has to move. The second indicator 293 may be displayed in a 3D form. For example, when the difference between the location information of the electronic device 101 and the location information of the satellite is out of a reference range, the second indicator 293 in the 3D form may be displayed on the display 160 in a dotted line together with an arrow.

In the screen 290b, the electronic device 101 may display the first indicator 221 indicating the direction of the satellite and the visual object 223 for the satellite. In the screen 290b, the electronic device 101 may guide the direction of movement of the electronic device 101 by displaying text 291b. For example, the electronic device 101 may display the text 291b "Move up to face the satellite" on the display 160. According to an embodiment, the electronic device 101 may display the second indicator 295 to indicate an approximate direction of the satellite and a direction in which the electronic device 101 has to move. The second indicator 295 may be displayed in a two-dimensional (2D) shape of circle. For example, when the difference between the location information of the electronic device 101 and the location information of the satellite is within the reference range, the second indicator 295 may be displayed on the display 160 in a dotted circle. In the circle of the second indicator 295 may be displayed a symbol '+' for indicating the center.

In the screen 290c, the electronic device 101 may display the first indicator 221 indicating the direction of the satellite and the visual object 223 for the satellite. In the screen 290b, the electronic device 101 may display text 291c to indicate that the direction of the electronic device 101 coincides with the direction of the satellite. For example, the electronic device 101 may display the text 291c "Maintain position to send and receive" on the display 160. According to an embodiment, the electronic device 101 may display the second indicator 299 to indicate a directional relationship with the satellite. For example, in case that the visual object 223 and the first indicator 221 overlap each other or the location information of the electronic device 101 matches the location information of the satellite, the second indicator 299 may be displayed on the display 160 as a circle in the form of a bold solid line.

In the disclosure, the first indicator refers to the direction of the satellite and may be referred to as a satellite indicator. The satellite indicator may indicate the direction of the satellite. The direction of the satellite may indicate the direction from the electronic device 101 to the satellite. The direction of the satellite may indicate the altitude angle of the satellite and the azimuth angle of the satellite. The satellite indicator may indicate the altitude angle and azimuth of the satellite.

In the disclosure, the second indicator refers to the direction of the antenna of the electronic device 101 and may be referred to as a visual object. The visual object may indicate the direction of the antenna. The direction of the antenna may indicate an elevation angle of the antenna and an azimuth angle of the antenna. As the direction of the electronic device changes, the visual object may display the location corresponding to the elevation angle of the antenna and the azimuth angle of the antenna through the user interface of the satellite-related application. The visual object may be displayed at a designated location (e.g., center) of the user interface.

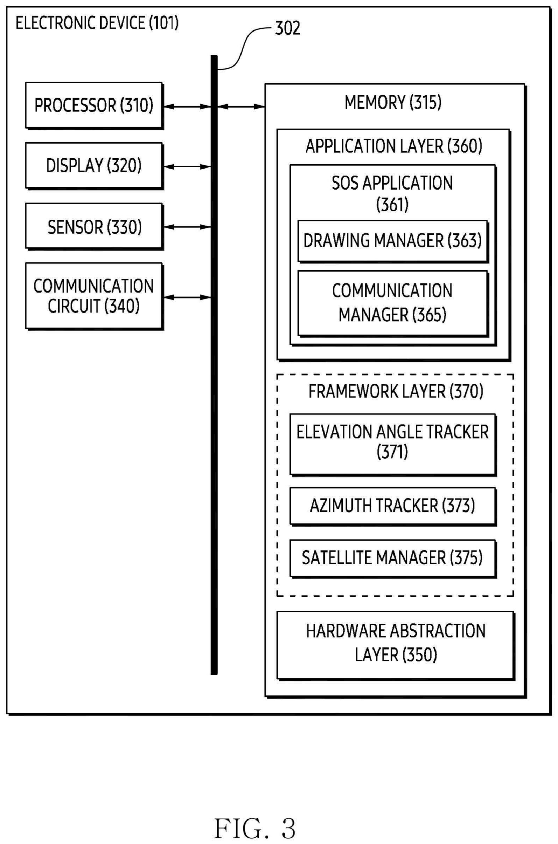

As described above, referring to FIGS. 2A, 2B and 2C, description has been made of the screen for guiding the direction of the electronic device 101. Hereinafter, hardware components and software applications included in the electronic device 101 will be described in greater detail below with reference to FIG. 3.

FIG. 3 is a block diagram illustrating an example configuration of an electronic device according to various embodiments. The electronic device 101 of FIG. 3 may include the electronic device 101 of FIG. 1. The operations of the electronic device described with reference to FIGS. 2A, 2B and 2C may be performed by the electronic device 101 of FIG. 3.

Referring to FIG. 3, the electronic device 101 may comprise at least one of a processor (e.g., including processing circuitry) 310, a memory 315, a display 320, a sensor 330, and/or a communication circuit 340. The processor 310, the memory 315, the display 320, the sensor 330, and the communication circuit 340 may be electrically and/or operably coupled with each other by an electronic component such as e.g., a communication bus 302. An SOS application 361, an elevation angle tracker 371, an azimuth tracker 373, and a satellite manager 375 may be stored in the memory 315 of the electronic device 101. The SOS application 361 may comprise a drawing manager 363 and a communication manager 365. Programs installed in the electronic device 101 may be classified into one layer of an application layer 360, a framework layer 370, and/or a hardware abstraction layer 350, based on targets.

According to an embodiment, the hardware components being operably coupled with each other may imply that a direct connection or an indirect connection between the hardware components is established by wire or wirelessly, such that, among the hardware, a second hardware component is controlled by a first hardware component. Although the drawing is illustrated herein based on different blocks, the embodiments are not limited thereto, and some of the hardware of FIG. 3 (e.g., at least part of the processor 310, the memory 315, and the communication circuit 340) may be incorporated into a single integrated circuit, such as e.g., a system on chip (SoC). The type and/or the number of hardware components included in the electronic device 101 are not limited to those illustrated in FIG. 3. For example, the electronic device 101 may include only some of the hardware components illustrated in FIG. 3.

In an embodiment, the processor 310 of the electronic device 101 may include various processing circuitry (as used herein, including the claims, the term "processor" may include various processing circuitry, including at least one processor, wherein one or more processors of at least one processor may be configured to perform the various functions described herein) and include hardware for processing data based on one or more instructions. The hardware for processing data may comprise, for example, and without limitation, an arithmetic and logic unit (ALU), a floating point unit (FPU), a field programmable gate array (FPGA), a central processing unit (CPU), and/or an application processor (AP). The processor 310 may have a structure of a single-core processor, or may have a structure of a multi-core processor such as a dual-core, a quad-core, or a hexa-core.

According to an embodiment, the processor 310 may receive a signal from a satellite through the communication circuit 340, based on execution of an application for satellite communication. The processor 310 may obtain location information of the electronic device 101 based on execution of the elevation angle tracker 371 and the azimuth tracker 373. The processor 310 may display a screen for guiding a direction of the electronic device 101 on the display 320, based on the location information of the electronic device 101 and the location information of the satellite.

In an embodiment, the memory 315 of the electronic device 101 may include a hardware component for storing data and/or instructions input to and/or output from the processor 310 of the electronic device 101. The memory 315 may comprise, for example, a volatile memory such as a random access memory (RAM) and/or a non-volatile memory such as a read-only memory (ROM). The volatile memory may comprise, for example, at least one of a dynamic RAM (DRAM), a static RAM (SRAM), a cache RAM, or a pseudo SRAM (PSRAM). The non-volatile memory may comprise, for example, at least one of a programmable ROM (PROM), an erasable PROM (EPROM), an electrically erasable PROM (EEPROM), a flash memory, a hard disk, a compact disk, a solid state drive (SSD), or an embedded multi-media card (eMMC).

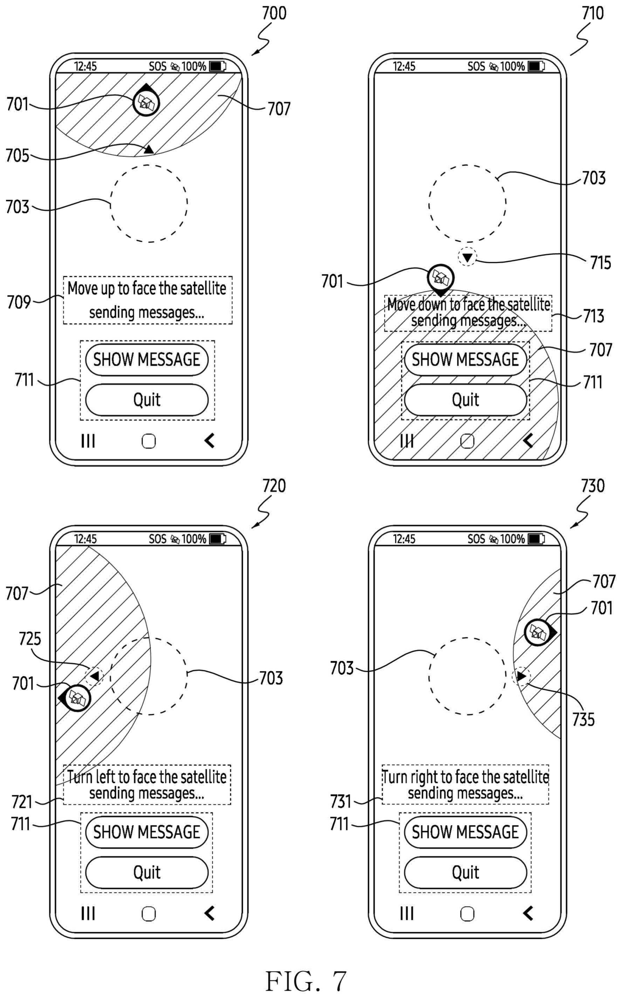

In an embodiment, the electronic device 101 may display the location of the satellite relative to the electronic device 101 on a screen (e.g., the screen of FIGS. 2A, 2B and 2C and the screen of FIGS. 7 to 12) through the display 320. For example, the display 320 may be controlled by the processor 310 including a circuit such as a graphic processing unit (GPU) to output visualized information to the user. The display 320 may include a flat panel display (FPD) and/or electronic paper. The FPD may include a liquid crystal display (LCD), a plasma display panel (PDP), and/or one or more light emitting diodes (LEDs). The LED may include an organic LED (OLED). According to an embodiment, the display 320 may output a message input screen through a satellite communication. The display 320 may output a screen including a first indicator identified based on the direction information of the electronic device 101 and the direction information of the satellite. The display 320 may output a screen including a second indicator for guiding the direction of the electronic device 101. The user may change the location of the electronic device 101 such that the first indicator and the second indicator overlap each other on the screen displayed through the display 320.

According to an embodiment, the sensor 330 may include an acceleration sensor and/or an inclination sensor. The electronic device 101 may identify a motion of the electronic device 101, based on the acceleration sensor. Using the acceleration sensor, the processor 310 of the electronic device 101 may identify a motion of an electronic device 101 based on six degree of freedom (DoF). The motion of the electronic device 101 based on six degree of freedom may include movement and rotation (e.g., roll, pitch, and yaw) of the electronic device 101 on three axes (e.g., x-axis, y-axis, and z-axis) perpendicular to each other. The electronic device 101 may identify the degree of tilting of the electronic device 101 based on the inclination sensor. Using the inclination sensor, the processor 310 of the electronic device 101 may identify the degree of tilting (e.g., roll, pitch, and yaw) of the electronic device 101 with respect to three axes (e.g., x-axis, y-axis, and z-axis) perpendicular to each other.

In an embodiment, the communication circuit 340 of the electronic device 101 may include a hardware component for supporting transmission and/or reception of electrical signals between the electronic device 101 and the satellite. The communication circuit 340 may include, for example, at least one of a modem, an antenna, and/or an optic/electronic (O/E) converter.

According to an embodiment, a program designed to target a user who controls the electronic device 101 may be classified into the application layer 360. For example, the program classified into the application layer 360 may include an SOS application 361 for transmitting and/or receiving an SOS signal. However, the embodiments of the disclosure may not be limited thereto. For example, the program classified into the application layer 360 may invoke an application programming interface (API) to cause execution of a function supported by the programs classified into the framework layer 370. The SOS application 361 may include at least one of a drawing manager 363 (e.g., canvas) and a communication manager 365 (e.g., handler). The drawing manager 363 may display a first indicator, a second indicator, and a visual object corresponding to the satellite on a two-dimensional screen, based on the location information of the satellite and the location information of the electronic device 101.

According to an embodiment, the electronic device 101 may obtain the elevation angle information included in the direction information of the electronic device 101, based on execution of the elevation angle tracker 371 in the framework layer 370. For example, the electronic device 101 may identify a motion of the electronic device 101 by the sensor 330. For example, the electronic device 101 may identify the elevation angle information based on the degree of tilting of the electronic device 101 by the inclination sensor.

According to an embodiment, the electronic device 101 may obtain the azimuth information of the electronic device 101 included in the direction information of the electronic device 101, based on the execution of the azimuth tracker 373 in the framework layer 370. The azimuth information may comprise an angle formed by a line perpendicular to a line where a horizontal plane meets the electronic device 101 and included in the horizontal plane and a line pointing to the North Pole.

According to an embodiment, the electronic device 101 may perform wireless communications with the satellite, based on execution of the satellite manager 375 (e.g., a Qualcomm telematics software development kit (QTSDK)) in the framework layer 370. For example, the electronic device 101 may receive satellite location information from the satellite, based on execution of the satellite manager 375. The electronic device 101 may transmit and/or receive a signal including the content of the message to/from the satellite, based on the execution of the satellite manager 375. The programs classified into the framework layer 370 may provide an application programming interface (API) that is executable based on other programs.

According to an embodiment, programs (e.g., drivers) designed to target the hardware of the electronic device 101 (e.g., the display 320, the sensor 330, and/or the communication circuit 340) may be classified into the hardware abstraction layer 350.

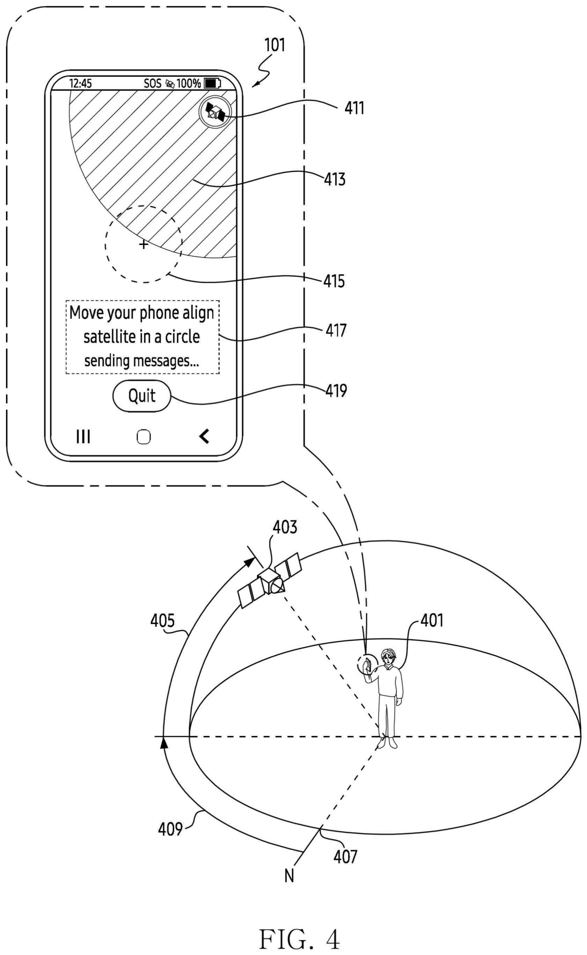

As described above, referring to FIG. 3, description has been made of the screen for guiding the direction of the electronic device 101. Hereinafter, the location information of the satellite will be described in greater detail below with reference to FIG. 4.

FIG. 4 is a diagram illustrating an example of location information of a satellite according to various embodiments. The electronic device 101 of FIG. 4 may include the electronic device 101 of FIG. 1 and/or FIG. 3. The operations of the electronic device described with reference to FIGS. 2A, 2B and 2C may be performed by the electronic device 101 of FIG. 4.

Referring to FIG. 4, a user 401 may execute an application for communication with a satellite 403 via the electronic device 101. Based on an input (e.g., signaling, a user input of the user 401), the electronic device 101 may execute an application for communication with the satellite 403. Direction information of the satellite 403 may be identified based on the location information of the electronic device 101 and the location information of the satellite 403. The direction information of the satellite 403 may include information on an elevation angle 405 and information on an azimuth 409. The electronic device 101 may display a first indicator 411, a second indicator 415, a visual object 413, text 417, and a button 419 on a screen for guiding the direction of the electronic device 101.

According to an embodiment, the electronic device 101 may receive the location information of the satellite 403 from the satellite 403 via a communication circuit (e.g., the communication module 190 of FIG. 1). For example, the location information of the satellite 403 may include information related to the latitude, information related to the longitude, and/or information related to the elevation angle. According to an embodiment, the direction information of the satellite identified based on the location information of the satellite may include information related to an azimuth of the satellite and information related to an elevation angle of the satellite. However, the embodiments of the disclosure may not be limited thereto. According to an embodiment, the electronic device 101 may obtain the location information of the satellite through a satellite information application. The electronic device 101 may obtain a location of an adjacent satellite through the satellite information application. The electronic device 101 may identify the location information of the electronic device 101 through a sensor (e.g., the sensor 330 of FIG. 3). For example, the sensor 330 may include a global positioning system (GPS) sensor. For example, the sensor 330 may include a gyro sensor or an acceleration sensor.

According to an embodiment, the electronic device 101 may identify the direction information of the satellite 403, based on the location information of the satellite 403 and the location information of the electronic device 101. The direction information of the satellite 403 may include information related to an azimuth (e.g., the azimuth 409) and information related to an elevation angle (e.g., the elevation angle 405). The elevation angle 405 may refer to an angle that a line connecting the satellite 403 and the electronic device 101 makes with respect to the horizontal plane. The azimuth 409 may refer to an angle in the clockwise direction between a line connecting the electronic device 101 and a point where the satellite 403 is projected perpendicular to the horizontal plane, and a line 407 in the direction of the North Pole.

According to an embodiment, the electronic device 101 may guide through the first indicator 411, the second indicator 415, and the visual object 413 displayed on the screen such that the direction information of the satellite 403 matches the direction information of the electronic device 101. The electronic device 101 may guide the user about the direction of the electronic device 101, by displaying the text 417 on the display. Based on the guide, the user may arrange the antenna included in the electronic device 101 toward the satellite. For example, the electronic device 101 may display the text 417 "Move your phone align satellite in a circle" through the display. The electronic device 101 may display the button 419 to quit the satellite search function on the display. When an input to the button 419 is identified, the electronic device 101 may stop the satellite search function.

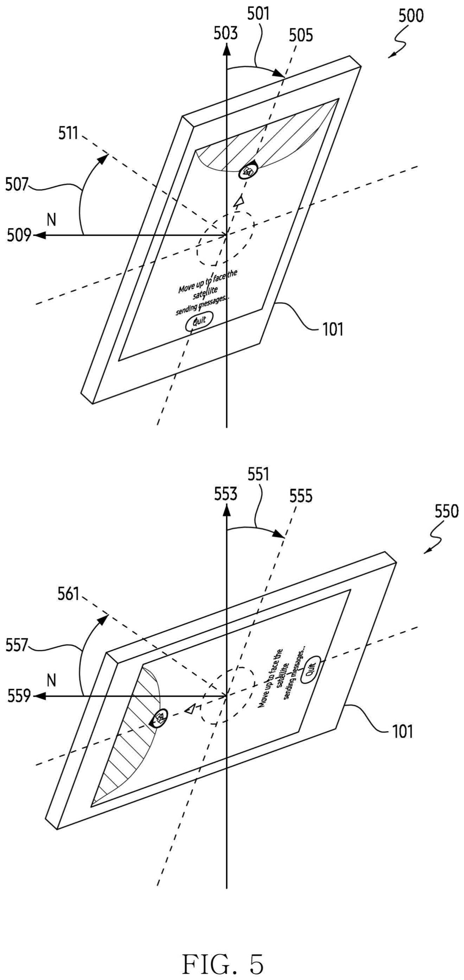

As described above, referring to FIG. 4, description has been made of the direction information of the satellite. Hereinafter, the direction information of the electronic device 101 will be described in greater detail below referring to FIG. 5.

FIG. 5 is a diagram illustrating an example of location information of an electronic device according to various embodiments. The electronic device 101 of FIG. 5 may include the electronic device 101 of FIG. 1, FIG. 3, and/or FIG. 4. The operations of the electronic device described with reference to FIGS. 2A, 2B and 2C may be performed by the electronic device 101 of FIG. 5.

Referring to FIG. 5, the electronic device (the electronic device 101 of FIG. 1) may operate in a first mode 500. The first mode 500 may be referred to as a portrait mode. The first mode 500 may be referred to as a vertical mode. In the first mode 500, the direction information of the electronic device 101 may include elevation angle information (e.g., the elevation angle 501) and azimuth information (e.g., the azimuth 507). The elevation angle 501 may be an angle between a vertical line 503 perpendicular to the horizontal plane and a first reference line 505 of the electronic device 101. The first reference line 505 may be a line passing through the center of the electronic device 101. The azimuth 507 may include an angle that a line 511 perpendicular to a line where the horizontal plane meets the electronic device 101 and parallel to the horizontal plane makes with respect to a line 509 pointing to the North Pole. In the first mode 500, the elevation angle of the electronic device 101 may be referred to as an antenna pitch value. The azimuth of the electronic device 101 may be referred to as an antenna azimuth.

Referring to FIG. 5, the electronic device 101 may operate in a second mode 550. The second mode 550 may be referred to as a landscape mode. The second mode 550 may be referred to as a horizontal mode. In the second mode 550, the direction information of the electronic device 101 may include elevation angle information (e.g., the elevation angle 551) and azimuth information (e.g., the azimuth 557). The elevation angle 551 may be an angle between a vertical line 553 perpendicular to the horizontal plane and a second reference line 555 of the electronic device 101. The second reference line 555 may be a line passing through the center of the electronic device 101. The azimuth 557 may include an angle that a line 561 perpendicular to a line where the horizontal plane meets the electronic device 101 and parallel to the horizontal plane makes with respect to a line 559 pointing toward the North Pole.

According to an embodiment, the electronic device 101 may identify the direction information through a sensor (e.g., the sensor 330 of FIG. 3) of the electronic device 101. For example, the sensor 330 may include a gravity sensor. For example, the sensor 330 may include an inclination sensor. However, the embodiments of the disclosure may not be limited thereto. The direction information of the electronic device 101 may include the azimuth information (507, 557) and the elevation angle information (501, 551) of the electronic device 101.

According to an embodiment, a direction of the antenna of the electronic device 101 may be determined according to the direction information of the electronic device 101. The satellite communication performance in case where the antenna is disposed toward the satellite may be higher than that in case where the antenna is not disposed toward the satellite. When the direction information (e.g., the elevation angle 405 and the azimuth 409 of FIG. 4) of the satellite in FIG. 4 matches the direction information (e.g., the elevation angle (501, 551) and the azimuth (507, 557)) of the electronic device 101, the antenna of the electronic device 101 may be disposed to face the satellite. Therefore, in order to improve the satellite communication performance, the electronic device 101 may display, on a display (e.g., the display 320 of FIG. 3), a screen for guiding the direction of the electronic device 101 such that the direction of the electronic device 101 coincides with the direction of the satellite. The screen may include an indicator for guiding the direction of the electronic device 101. The user may change the direction of the electronic device 101 based on the screen. The electronic device 101 may display, on the display 320, a visual object for indicating that a message may be transmitted to the satellite, based on identifying the direction of the electronic device 101 matching the direction of the satellite. In the second mode 550, the elevation angle of the electronic device 101 may be referred to as an antenna roll value. The azimuth of the electronic device 101 may be referred to as an antenna azimuth.

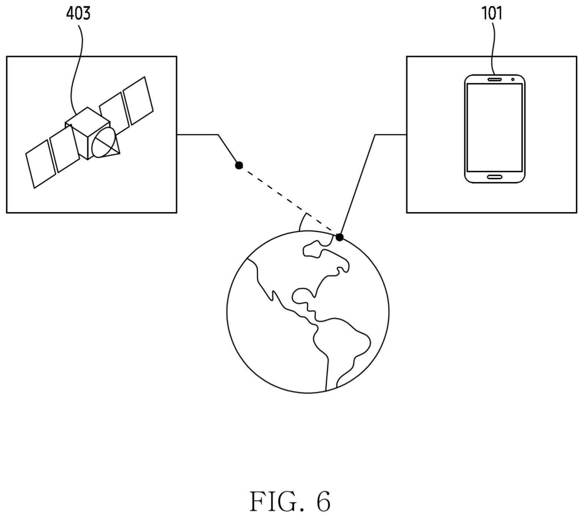

As described above, with reference to FIGS. 4 and 5, description has been made of the direction information of the satellite and the direction information of the electronic device 101. Hereinafter, the information about the satellite communication system will be described in greater detail below with reference to FIG. 6.

FIG. 6 is a diagram illustrating an example of wireless communication via a satellite according to various embodiments. The electronic device 101 of FIG. 6 may include the electronic device 101 of FIG. 1, FIG. 3, FIG. 4, and/or FIG. 5. The operations of the electronic device described with reference to FIGS. 2A, 2B and 2C may be performed by the electronic device 101 of FIG. 6.

Referring to FIG. 6, illustrated is an example environment for performing an interaction between the electronic device 101 located on the planet (e.g., Earth) and the satellite 403 over the planet.

The electronic device 101 according to an embodiment may perform connection with the satellite 403 through a communication circuit (e.g., the communication circuit 340 of FIG. 3). The electronic device 101 may receive downlink information from the satellite, based on the connection with the satellite 403. The downlink-based information may include information about a location (e.g., altitude) of the satellite 403, a loss rate, antenna-radiated power (e.g., effective isotropic radiated power (EIRP)), receiver sensitivity of the satellite 403, link margin, antenna gain, and/or received power.

According to an embodiment, the electronic device 101 may transmit uplink information to the satellite 403 based on the connection with the satellite 403 through the communication circuit 340. The uplink information may include information about transmission power, loss rate, antenna-radiated power, receiver sensitivity of the electronic device 101, link margin, elevation angle between the satellite 403 and the electronic device 101, and/or antenna gain.

For example, the electronic device 101 may receive the location information (e.g., latitude-related information, longitude-related information, or altitude-related information) of the satellite 403 from the satellite 403. According to an embodiment, the direction information of the satellite identified based on the location information of the satellite may include information related to an azimuth of the satellite and information related to an elevation angle of the satellite. However, the embodiments of the disclosure may not be limited thereto. According to an embodiment, the electronic device 101 may obtain the location information of the satellite 403 through a satellite information application. The electronic device 101 may identify the direction information of the satellite 403 based on the location information of the satellite 403 obtained through the satellite information application. The electronic device 101 may obtain the location information (e.g., latitude-related information, longitude-related information, or altitude-related information) of the electronic device 101. The electronic device 101 may identify the direction information of the satellite 403 based on the location information of the electronic device 101 and the location information of the satellite 403. For example, the direction information of the satellite 403 may include elevation angle information and azimuth information of the satellite 403.

For example, the electronic device 101 may initiate connection with the satellite 403, based on execution of an application for satellite communication. For example, the satellite 403 may transmit a signal including the location information of the satellite 403, based on reception of at least one signal to initiate connection from the electronic device 101 through a communication circuit. However, the embodiments of the disclosure may not be limited thereto.

For example, the electronic device 101 may identify the direction of the satellite 403 relative to the electronic device 101, in order to transmit a message. The electronic device 101 may identify the connection with the satellite 403 for transmitting a message, based on identifying that the direction of the satellite 403 is within a specified range.

As described above, referring to FIG. 6, description has been made of the information on the satellite communication system. Hereinafter, a user interface (UI) screen including an indicator will be described in greater detail below with reference to FIGS. 7 to 10.

FIG. 7 is a diagram illustrating an example of an indicator displaying scheme for guiding movement of an electronic device according to various embodiments. The electronic device 101 described with reference to FIG. 7 may include the electronic device 101 of FIG. 1, FIG. 3, FIG. 4, FIG. 5 and/or FIG. 6. The operations of the electronic device described with reference to FIGS. 2A, 2B and 2C may be performed by the electronic device 101 described with reference to FIG. 7.

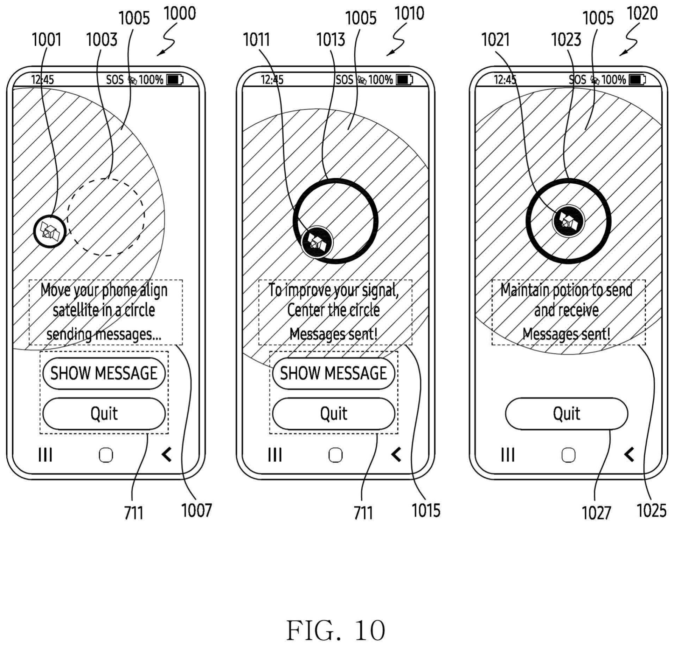

Referring to FIG. 7, the electronic device (e.g., the electronic device 101 of FIG. 1) may display a screen (e.g., screen 700, screen 710, screen 720, and screen 730) for guiding the direction of the electronic device 101, on a display (e.g., the display 320 of FIG. 3). The electronic device 101 may display a first indicator 701, a first portion 703 of a second indicator, a second portion 705 of the second indicator, a visual object 707, text 709, and a button 711 on the screen 700. The electronic device 101 may display a first indicator 701, a first portion 703 of a second indicator, a second portion 715 of the second indicator, text 713, and a button 711, on the screen 710. The screen 720 may display a first indicator 701, a first portion 703 of a second indicator, a second portion 725 of the second indicator, a visual object 707, text 721, and a button 711. The electronic device 101 may display a first indicator 701, a first portion 703 of a second indicator, a second portion 735 of the second indicator, text 731, and a button 711 on the screen 730. The first portion 703 of the second indicator may include a visual object (e.g., an object in the form of dotted circle) for guiding the direction of the electronic device 101 when the satellite corresponds to a point within the screen. The user may adjust the direction of the electronic device 101 such that the first indicator (e.g., the first indicator 1001 of FIG. 10 below) overlaps the first portion 703 of the second indicator. The second portion 705 of the second indicator may include a visual object (e.g., an arrow-shaped object) for guiding the direction of the electronic device 101 when the satellite corresponds to a point out of the screen. The user may adjust the direction of the electronic device 101 in the direction indicated by the second portion 705 of the second indicator so that the satellite corresponds to a point within the screen. In the screen (e.g., the screen 700 to the screen 730), the electronic device 101 may display a visual object 707 (e.g., in the form of a circle with blurred boundary) on the screen to indicate an approximate location of the satellite. In the screen (e.g., the screen 700 to the screen 730), the electronic device 101 may display the button 711 to quit the satellite search function on the display 320. When an input to the button 711 is identified, the electronic device 101 may stop the satellite search function. In the screen (e.g., the screen 700 to the screen 730), the electronic device 101 may display on the display 320 the button 711 for identifying a written message. When an input to the button 711 is identified, the electronic device 101 may display the written message on the display 320.

According to an embodiment, the second indicator may be displayed on the display 320 to guide the direction of the electronic device 101. The first portion 703 of the second indicator may guide the direction of the electronic device 101 when a difference between the direction information of the satellite and the direction information of the electronic device 101 is within a specified range. For example, when a difference between the azimuth information (e.g., the azimuth 507 or 557 of FIG. 5) of the electronic device 101 and the azimuth information (e.g., the azimuth 409 of FIG. 4) of the satellite is within the specified range of angle and a difference between the elevation angle information (e.g., the elevation angle 501 or 551 of FIG. 5) of the electronic device 101 and the elevation angle information (e.g., the elevation angle 405 of FIG. 4) of the satellite is within a specified range of angle, the first portion 703 of the second indicator may guide the direction of the electronic device 101. In other words, when the satellite is included in the screen, the first portion 703 of the second indicator may guide the direction of the electronic device 101. According to an embodiment, the second portion 705 of the second indicator may guide the direction of the electronic device 101, when the difference between the direction information of the satellite and the direction information of the electronic device 101 is out of the specified range. For example, when the difference between the azimuth information (e.g., the azimuth 507 or 557) of the electronic device 101 and the azimuth information (e.g., the azimuth 409) of the satellite is out of the specified angle range, or when the difference between the elevation angle information (e.g., the elevation angle 501 or 551) of the electronic device 101 and the elevation angle information (e.g., the elevation angle 405) of the satellite is out of the specified angle range, the second portion 705 of the second indicator may guide the direction of the electronic device 101. In other words, when the satellite is not included within the screen, the second portion 705 of the second indicator may guide the direction of the electronic device 101.

According to an embodiment, in the screen 700 and the screen 710, the difference between the direction information of the satellite and the direction information of the electronic device 101 may be out of a specified range. For example, the difference between the azimuth information of the electronic device 101 and the azimuth information of the satellite may be within the specified angle (e.g., from about - 45 degrees to about + 45 degrees). The difference between the elevation angle information of the electronic device 101 and the elevation angle information of the satellite may be out of the specified angle (e.g., from about - 45 degrees to about + 45 degrees). In the screen 700, the first indicator 701 may indicate a location of the satellite corresponding to a certain point outside the screen. According to an embodiment, since the location of the satellite is out of the specified area, the second portion 705 of the second indicator, other than the first portion 703 of the second indicator, may guide the direction of the electronic device 101. Since the difference between the azimuth information of the electronic device 101 and the azimuth information of the satellite is within the specified angle range, when the difference between the elevation angle information of the electronic device 101 and the elevation angle information of the satellite is within the specified angle range, the location of the satellite may be changed to within the specified range. According to an embodiment, in the screen 700, when the direction of the electronic device 101 is rotated in a direction (e.g., upward) that an absolute value of the difference between the elevation angle information of the electronic device 101 and the elevation angle information of the satellite decreases, the second portion 705 may indicate that the location of the satellite relative to the location of the electronic device 101 may be changed to within the specified range. In other words, since the elevation angle information of the satellite is greater than the elevation angle information of the electronic device 101, when the electronic device 101 is rotated in a direction (e.g., upward) that the elevation angle information of the electronic device 101 increases, the location of the satellite relative to the electronic device 101 may be changed to within a specified range. According to an embodiment, in the screen 700, the electronic device 101 may display the text 709 "Move up to face the satellite" on the display 320.

According to an embodiment, in the screen 710, the first indicator 701 may indicate a location of the satellite corresponding to a certain point outside the screen. In the screen 710, when the direction of the electronic device 101 is rotated in a direction (e.g., downward) that an absolute value of the difference between the elevation angle information of the electronic device 101 and the elevation angle information of the satellite decreases, the second portion 715 may indicate that the location of the satellite with respect to the location of the electronic device 101 may be changed to within a specified range. In other words, since the elevation angle information of the electronic device 101 is greater than the elevation angle information of the satellite, when the electronic device 101 is rotated in a direction (e.g., downward) that the elevation angle information of the electronic device 101 is to be reduced, the location of the satellite relative to the electronic device 101 may be changed to within a specified range. The second portion (e.g., the second portion 705 or the second portion 715) may indicate a direction according to the difference between the elevation angle information of the electronic device 101 and the elevation angle information of the satellite. According to an embodiment, in the screen 710, the electronic device 101 may display the text 713 "Move down to face the satellite" on the display 320. According to an embodiment, in the screen 720 and the screen 730, the difference between the azimuth information of the electronic device 101 and the azimuth information of the satellite may be out of the specified angle range (e.g., from about - 45 degrees to about + 45 degrees). The difference between the elevation angle information of the electronic device 101 and the elevation angle information of the satellite may be within the specified angle range (e.g., from about - 45 degrees to about + 45 degrees). Thus, the second portion (e.g., the second portion 725 or the second portion 735) of the second indicator may guide the direction of the electronic device 101. Since the difference between the elevation angle information of the electronic device 101 and the elevation angle information of the satellite is within the specified angle range, when the difference between the azimuth information of the electronic device 101 and the azimuth information of the satellite is within the specified angle range, the location of the satellite may be changed to within the specified range.

According to an embodiment, in the screen 720, the first indicator 701 may indicate a location of the satellite corresponding to a certain point out of the screen. In the screen 720, the second portion 725 may indicate that the location of the satellite relative to the location of the electronic device 101 may be changed to within the specified range, when the direction of the electronic device 101 is rotated in a direction (e.g., left) that an absolute value of the difference between the azimuth information of the electronic device 101 and the azimuth information of the satellite is to be reduced. That is, the azimuth information of the electronic device 101 is greater than the azimuth information of the satellite, and therefore, when the electronic device 101 is rotated in a direction (e.g., left) that the azimuth information of the electronic device 101 is to be reduced, the location of the satellite relative to the electronic device 101 may be changed to within the specified range. According to an embodiment, in the screen 720, the electronic device 101 may display the text 721 "Turn left to face the satellite" on the display 320.

According to an embodiment, in the screen 730, the first indicator 701 may indicate a location of the satellite corresponding to a certain point out of the screen. In the screen 730, the second portion 735 may indicate that the location of the satellite with respect to the position of the electronic device 101 may be changed to within the specified range, when the direction of the electronic device 101 is rotated in a direction (e.g., right) that an absolute value of the difference between the azimuth information of the electronic device 101 and the azimuth information of the satellite is to be reduced. For example, the azimuth information of the satellite is greater than the azimuth information of the electronic device 101, and therefore, when the electronic device 101 is rotated in a direction (e.g., right) that the azimuth information of the electronic device 101 is to be increased, the location of the satellite relative to the electronic device 101 may be changed to within the specified range. The second portion (725, 735) may indicate a direction according to the difference between the azimuth information of the electronic device 101 and the azimuth information of the satellite. According to an embodiment, in the screen 730, the electronic device 101 may display the text 731 "Turn right to face the satellite" on the display 320.

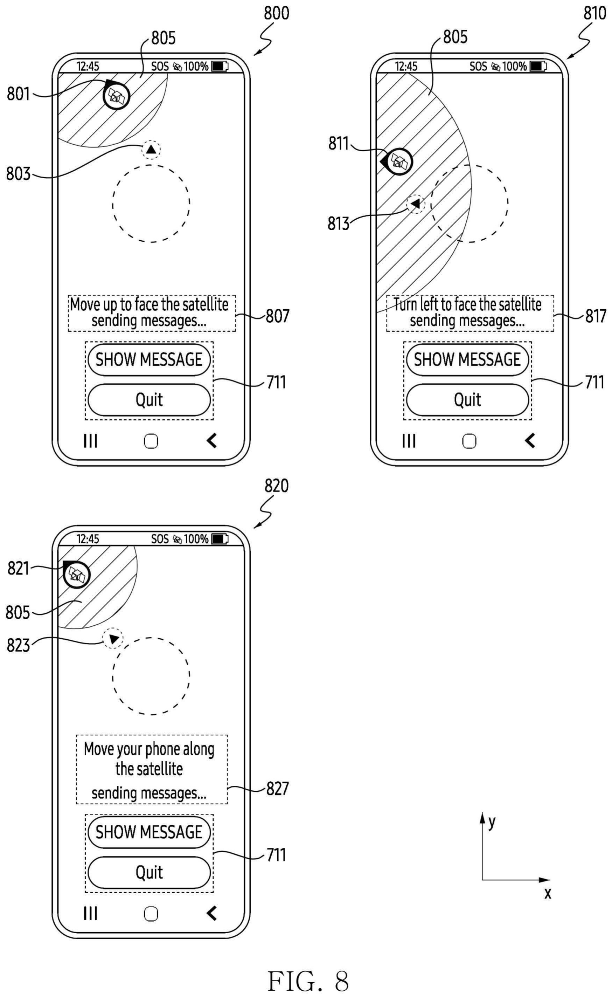

As described above, referring to FIG. 7, the description has been made of the indicator in the screen for guiding the direction of the electronic device 101. Hereinafter, a difference between the first indicator and the second indicator will be described in greater detail below with reference to FIG. 8.

FIG. 8 is a diagram illustrating an example of a difference according to the type of a plurality of indicators according to various embodiments. The electronic device 101 described with reference to FIG. 8 may include the electronic device 101 of FIG. 1, FIG. 3, FIG. 4, FIG. 5, and/or FIG. 6. The operations of the electronic device described with reference to FIGS. 2A, 2B, 2C, and/or FIG. 7 may be performed by the electronic device 101 described with reference to FIG. 8.

Referring to FIG. 8, the electronic device (e.g., the electronic device 101 of FIG. 1) may display a screen (e.g., a screen 800, a screen 810, and a screen 820) for guiding the direction of the electronic device 101 on a display (e.g., the display 320 of FIG. 3). In the screen 800, the electronic device 101 may display a first indicator 801, a second indicator 803, a visual object 805, text 807, and a button 711 on the display 320. In the screen 810, the electronic device 101 may include a first indicator 811, a second indicator 813, a visual object 805, text 817, and a button 711. In the screen 820, the electronic device 101 may include a first indicator 821, a second indicator 823, a visual object 805, text 827, and a button 711.

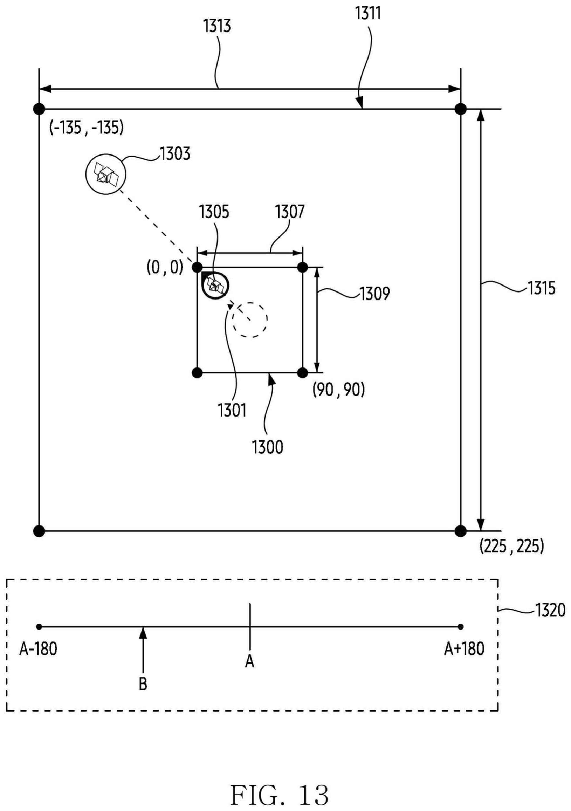

According to an embodiment, the electronic device 101 may display the azimuth information of the satellite and the elevation angle information of the satellite through a position of the first indicator (e.g., the first indicator 801, the first indicator 811, the first indicator 821). A method of identifying the position of the first indicator (801, 811, 821) based on the direction information of the satellite and the direction information of the electronic device 101 will be described in greater detail below with reference to FIG. 13.

According to an embodiment, the electronic device 101 may identify the position of the first indicator (801, 811, 821) on the display 320 with respect to a first direction, based on the difference between the azimuth information of the electronic device 101 and the azimuth information of the satellite. When an absolute value of the difference between the azimuth information of the electronic device 101 and the azimuth information of the satellite is within a reference angle, the electronic device 101 may display the azimuth information of the satellite through the position of the first indicator (801, 811, 821) in the first direction (e.g., +x-axis direction).

According to an embodiment, the electronic device 101 may identify the position of the first indicator (801, 811, 821) on the display 320 with respect to a second direction perpendicular to the first direction, based on the difference between the elevation angle information of the electronic device 101 and the elevation angle information of the satellite. When the absolute value of the difference between the elevation angle information of the electronic device 101 and the elevation angle information of the satellite is within the reference angle, the electronic device 101 may display the elevation angle information of the satellite through the position of the first indicator (801, 811, 821) in the second direction (e.g., +y-axis direction) perpendicular to the first direction.

According to an embodiment, in the screen (e.g., the screen 800 to the screen 820), the electronic device 101 may display a visual object 805 (e.g., in the form of a circle with blurred boundary) on the screen to indicate an approximate location of the satellite. In the screen (e.g., the screen 800 to the screen 820), the electronic device 101 may display the button 711 to quit the satellite search function on the display 320. When an input to the button 711 is identified, the electronic device 101 may stop the satellite search function. In the screen (e.g., the screen 800 to the screen 820), the electronic device 101 may display the button 711 for identifying a written message on the display 320. When an input to the button 711 is identified, the electronic device 101 may display the written message on the display 320. According to an embodiment, in the screen 800, an absolute value (e.g., about +17 degrees) of a difference between the azimuth information (e.g., about +261 degrees) of the electronic device 101 and the azimuth information (e.g., about +244 degrees) of the satellite may be equal to or less than a specified angle (e.g., about +45 degrees). An absolute value (e.g., about +60 degrees) of a difference between the elevation angle information (e.g., about -1 degree) of the electronic device 101 and the elevation angle information (e.g., about -59 degrees) of the satellite may be larger than a specified angle (e.g., about +45 degrees). In the screen 800, the first indicator 801 may indicate a location of the satellite out of a specified range on the display 320. The specified range may be a range of a threshold angle that can be displayed on the screen. The first indicator 801 may not represent an elevation angle of a satellite that exceeds the specified angle, which is a threshold point that can be displayed on the screen. The first indicator 801 may be displayed to face an uppermost side of the screen (e.g., in the +y-axis direction), so that it may represent only the fact that the difference between the elevation angle of the electronic device 101 and the elevation angle of the satellite is out of the specified range. Therefore, the position of the first indicator 801 in the first direction (e.g., +x-axis direction) may be identified corresponding to the difference between the azimuth information of the electronic device 101 and the azimuth information of the satellite. Since the difference between the elevation angle information of the electronic device 101 and the elevation angle information of the satellite is out of the specified angle range, the position of the first indicator 801 in the second direction (e.g., in the +y-axis direction) may be identified corresponding to an upper point in the second direction.

According to an embodiment, the second indicator 803 may guide a direction of the electronic device 101. According to an embodiment, when the difference between the azimuth information of the electronic device 101 and the azimuth information of the satellite is less than a specified angle range and the difference between the elevation angle information of the electronic device 101 and the elevation angle information of the satellite is out of a specified angle range, the electronic device 101 may display a notification to change the elevation angle of the electronic device 101, through the direction of the second indicator 803. According to an embodiment, when the difference between the azimuth information of the electronic device 101 and the azimuth information of the satellite is out of a specified angle range and the difference between the elevation angle information of the electronic device 101 and the elevation angle information of the satellite is within a specified angle range, the electronic device 101 may display a notification to change the azimuth of the electronic device 101, through the direction of the second indicator 803.

According to an embodiment, since the absolute value of the difference between the azimuth information (e.g., about + 261 degrees) of the electronic device 101 and the azimuth information (e.g., about + 244 degrees) of the satellite is within the specified angle (e.g., about +45 degrees), when the absolute value of the difference between the elevation angle information (e.g., about -1 degree) of the electronic device 101 and the elevation angle information (e.g., about -59 degrees) of the satellite is within the specified angle (e.g., about +45 degrees), the location of the satellite may be changed to within the specified range. According to an embodiment, in the screen 800, the second indicator 803 may indicate that the location of the satellite relative to the location of the electronic device 101 may be changed to within the specified range, when the direction of the electronic device 101 is rotated upward (e.g., in +y-axis direction). Therefore, in the screen 800, the guide direction may be an upward direction (e.g., +y-axis direction). In other words, since the difference between the elevation angle information of the satellite and the elevation angle information of the electronic device 101 is out of the specified angle range, the second indicator 803 may indicate the guide direction on the screen, by pointing to the upward direction (e.g., +y-axis direction).

According to an embodiment, in the screen 800, the electronic device 101 may display the text 807 "Move up to face the satellite" on the display 320.

According to an embodiment, in the screen 810, the absolute value (e.g., about +61 degrees) of the difference between the azimuth information (e.g., about +305 degrees) of the electronic device 101 and the azimuth information (e.g., about +244 degrees) of the satellite may be larger than the specified angle (e.g., about +45 degrees). The absolute value (e.g., about +9 degrees) of the difference between the elevation angle information (e.g., about -50 degrees) of the electronic device 101 and the elevation angle information (e.g., about -59 degrees) of the satellite may be equal to or less than the specified angle (e.g., about +45 degrees). **In** the screen 810, the first indicator 811 may indicate a position of the satellite out of the specified range, on the display 320. The position of the first indicator 811 in the first direction (e.g., +x-axis direction) may be identified corresponding to a left-sided point of the first direction, since the difference between the azimuth information of the electronic device 101 and the azimuth information of the satellite is out of the specified range. The first indicator 811 may indicate a left direction (e.g., -x-axis direction) to represent the difference between the azimuth information of the electronic device 101 and the azimuth information of the satellite. The position of the second indicator 813 in the second direction (e.g., +y-axis direction) may be identified corresponding to the difference between the elevation angle information of the electronic device 101 and the elevation angle information of the satellite.

According to an embodiment, the second indicator 813 may guide the direction of the electronic device 101. According to an embodiment, when the absolute value (e.g., about +61 degrees) of the difference between the azimuth information (e.g., about +305 degrees) of the electronic device 101 and the azimuth information (e.g., about +244 degrees) of the satellite is larger than the specified angle (e.g., about +45 degrees) and the absolute value (e.g., about +9 degrees) of the difference between the elevation angle information (e.g., -50 degrees) of the electronic device 101 and the elevation angle information (e.g., about -59 degrees) of the satellite is less than the specified angle (e.g., about +45 degrees), the electronic device 101 may display a notification requesting to change the azimuth of the electronic device 101, through the direction of the second indicator.

According to an embodiment, in the screen 810, the electronic device 101 may display the text 817 "Turn left to face the satellite" on the display 320. According to an embodiment, in the screen 820, the absolute value (e.g., about +108 degrees) of the difference between the azimuth information (e.g., about +352 degrees) of the electronic device 101 and the azimuth information (e.g., about +244 degrees) of the satellite may be larger than the specified angle (e.g., about +45 degrees). The absolute value (e.g., about +99 degrees) of the difference between the elevation angle information (e.g., about +40 degrees) of the electronic device 101 and the elevation angle information (e.g., about -59 degrees) of the satellite may be larger than the specified angle (e.g., about +45 degrees). In the screen 820, the first indicator 821 may indicate a location of the satellite out of the specified range on the display 320. Since the difference between the azimuth information of the electronic device 101 and the azimuth information of the satellite has exceeded the specified angle range, the position of the first indicator 821 in the first direction (e.g., +x-axis direction) may be identified corresponding to a left-sided point in the first direction. The position of the first indicator 821 in the second direction (e.g., +y-axis direction) may be identified corresponding to an upper point in the second direction (e.g., +y-axis direction), since the difference between the elevation angle information of the electronic device 101 and the elevation angle information of the satellite has exceeded the specified angle range. The first indicator 821 may indicate an oblique direction (e.g., an intermediate direction in between the -x-axis direction and the +y-axis direction) in order to represent the difference between the azimuth information of the electronic device 101 and the azimuth information of the satellite, and the difference between the elevation angle information of the electronic device 101 and the elevation angle information of the satellite.

According to an embodiment, the second indicator 823 may guide the direction of the electronic device 101. According to an embodiment, when the difference (e.g., about +108 degrees) between the azimuth information (e.g., about +352 degrees) of the electronic device 101 and the azimuth information (e.g., about +244 degrees) of the satellite exceeds the specified angle (e.g., about +45 degrees) and the difference (e.g., about +99 degrees) between the elevation angle information (e.g., about +40 degrees) of the electronic device 101 and the elevation angle information (e.g., about -59 degrees) of the satellite exceeds the specified angle (e.g., about +45 degrees), the electronic device 101 may indicate a notification requesting to change the azimuth and the elevation angle of the electronic device 101, through the direction of the second indicator. The direction of the second indicator 823 may indicate an oblique direction (e.g., an intermediate direction between the -x-axis direction and the +y-axis direction).

According to an embodiment, in the screen 820, the electronic device 101 may display the text 827 "Move your phone along the satellite" on the display 320.

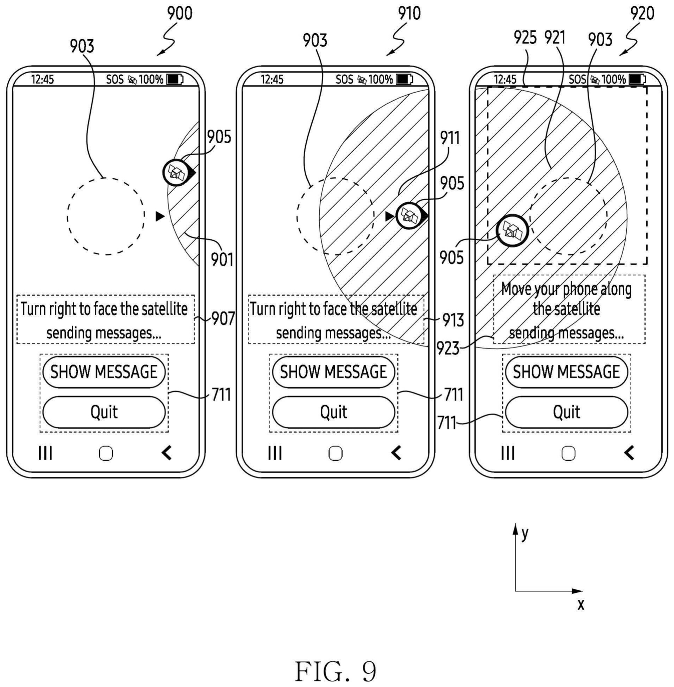

As described above, the difference between the first indicator and the second indicator has been described with reference to FIGS. 7 and 8. Hereinafter, a visual object for intuitively displaying a location of a satellite will be described in greater detail below with reference to FIG. 9.

FIG. 9 is a diagram illustrating an example of a visual object corresponding to a satellite, according to various embodiments. The electronic device 101 described with reference to FIG. 9 may include the electronic device 101 of FIG. 1, FIG. 3, FIG. 4, FIG. 5, and/or FIG. 6. The operation of the electronic device described with reference to FIG. 2A, FIG. 2B, FIG. 2C, FIG. 7, and/or FIG. 8 may be performed by the electronic device 101 described with reference to FIG. 9.

Referring to FIG. 9, the electronic device (e.g., the electronic device 101 of FIG. 1) may display, on a display (e.g., the display 320 of FIG. 3), a screen (e.g., a screen 900, a screen 910, a screen 920) for indicating a location of a satellite and for guiding a direction of the electronic device 101. The electronic device 101 may display a visual object 901, a first indicator 905, a second indicator 903, a text 907, and a button 711 on the display 320, in the screen 900. The electronic device 101 may display a visual object 911, a first indicator 905, a second indicator 903, a text 913, and a button 711 on the display 320, in the screen 910. The electronic device 101 may include a visual object 921, a first indicator 905, a second indicator 903, a text 923, and a button 711, in the screen 920. The visual object (e.g., the visual object 901, the visual object 911, the visual object 921) may correspond to a satellite. The visual object (e.g., the visual object 901, the visual object 911, the visual object 921) may represent location information of the satellite. An area 925 may represent a position that serves as a reference for a state change of the first indicator. The electronic device 101 may not display the area 925 on the display 320.

In the screen (e.g., the screen 900 to the screen 920), the electronic device 101 may display the button 711 to quit the satellite search function on the display 320. When an input to the button 711 is identified, the electronic device 101 may stop the satellite search function. In the screen (e.g., the screen 900 to the screen 920), the electronic device 101 may display the button 711 for identifying a written message on the display 320. When an input to the button 711 is identified, the electronic device 101 may display the written message on the display 320. According to an embodiment, the electronic device 101 may display a visual object (e.g., the visual object 901, the visual object 911, the visual object 921) corresponding to the satellite on the display 320. The visual object (901, 911, 921) may include graphics (e.g., translucent graphics, satellite-shaped icon, radial graphics centered on the satellite) for representing the location information of the satellite, based on the location information of the satellite. The visual object may be included on the screen (e.g., the screen 900, the screen 910, the screen 920) to intuitively indicate the location of the satellite, even if the location information of the satellite with respect to the location information of the electronic device 101 is out of the specified range. The greater the difference between the location information of the electronic device 101 and the location information of the satellite, the less area the visual object may be displayed. The less the difference between the location information of the electronic device 101 and the location information of the satellite, the larger area the visual object (901, 911, 921) may be displayed. The visual objects (901, 911, 921) may represent the difference between the location information of the electronic device 101 and the location information of the satellite, based on the area. According to an embodiment, in the screen 900, the second indicator 903 for guiding the direction of the electronic device 101 in the right direction (e.g., the +x-axis direction) may be displayed on the display 320. The user may rotate the electronic device 101 to the right, based on the guide of the second indicator 903. According to an embodiment, in the screen 900, the electronic device 101 may display the text 907 "Turn right to face the satellite" on the display 320. According to an embodiment, in the screen 900, the first indicator 905 may indicate a location of a satellite corresponding to a certain point out of the screen.

According to an embodiment, in the screen 910, the area of the visual object 911 may be greater than the area of the visual object 901. This is because the difference between the location information of the electronic device 101 and the location information of the satellite is reduced. A second indicator for guiding the direction of the electronic device 101 in the right direction (e.g., the +x-axis direction) may be displayed on the display 320. The user may rotate the electronic device 101 to the right, based on the guide of the second indicator. According to an embodiment, in the screen 910, the electronic device 101 may display the text 913 "Turn right to face the satellite" on the display 320. According to an embodiment, in the screen 910, the first indicator 905 may indicate a location of a satellite corresponding to a certain point out of the screen.

According to an embodiment, in the screen 920, the area of the visual object 921 may be greater than the area of the visual object 911. This is because the difference between the location information of the electronic device 101 and the location information of the satellite is reduced. Further, the absolute value of the difference between the location information of the satellite and the location information of the electronic device 101 may be equal to or less than the specified angle. Accordingly, a portion indicating the direction of the second indicator may disappear, and another portion guiding the antenna to be disposed toward the satellite may be displayed. The user may rotate the electronic device 101 to the right, based on guiding of the second indicator.

According to an embodiment, in the screen 920, the electronic device 101 may visually display a change in the location information of the satellite, which is transmitting a signal, on the display 320, based on a change in the characteristics (e.g., color, whether to rotate, transparency, size) of the first indicator. For example, the characteristic (e.g., color, shape, complexity, or size) of the first indicator 905 in the first state may be different from the characteristic (e.g., color, shape, complexity, or size) of the first indicator 905 in the second state. The first indicator 905 in the first state may indicate a point out of the screen 920. The first indicator 905 in the second state may indicate a point inside the screen 940. For example, the size of the first indicator 905 in the second state may be larger than the size of the first indicator 905 in the first state.

According to an embodiment, the characteristic (e.g., size) of the first indicator 905 in the first state may be changed to the characteristic (e.g., size) of the first indicator 905 in the second state, based on a designated position. For example, the designated position may be inside the area 925. The area 925 may be an area spaced apart from an outline of the screen 920 by a specified number of pixels (e.g., about 69 pixels). When the position of the center point of the first indicator 905 is identified to be within the area 925, the electronic device 101 may display on the display the size of the first indicator 905 in the second state to be larger than the size of the first indicator 905 in the first state in order to visually represent the location information of the satellite.

According to an embodiment, in the screen 920, the electronic device 101 may display the text 923 "Move your phone along the satellite" on the display 320. According to an embodiment, in the screen 920, the first indicator 905 may indicate a location of the satellite corresponding to a point inside the screen. The characteristic of the first indicator 905 corresponding to a point out of the screen may be different from the characteristic of the first indicator 905 corresponding to a point inside the screen. For example, since the first indicator 905 corresponding to a certain point out of the screen may point to one point out of the screen, it may have an arrow shape. The first indicator 905 corresponding to a certain point inside the screen may be circular because it may point to one point inside the screen. As described above, referring to FIG. 9, description has been made of a visual object corresponding to a satellite. Hereinafter, a user interface (UI) screen representing overlapping of indicators will be described in greater detail below with reference to FIG. 10.

FIG. 10 is a diagram illustrating an example of overlapping of indicators according to various embodiments. The electronic device 101 described with reference to FIG. 10 may include the electronic device 101 of FIG. 1, FIG. 3, FIG. 4, FIG. 5, and/or FIG. 6. The operations of the electronic device described with reference to FIG. 2A, FIG. 2B, FIG. 2C, FIG. 7, FIG. 8, and/or FIG. 9 may be performed by the electronic device 101 described with reference to FIG. 10.

Referring to FIG. 10, the electronic device (e.g., the electronic device 101 of FIG. 1) may represent a screen (e.g., screen 1000, screen 1010, and screen 1020) for guiding a direction of the electronic device 101. The electronic device 101 may include a first indicator 1001, a second indicator 1003, a visual object 1005, a text 1007, and a button 711 in the screen 1000. The electronic device 101 may include a first indicator 1011, a second indicator 1013, a visual object 1005, a text 1015, and a button 711 in the screen 1010. The electronic device 101 may include a first indicator 1021, a second indicator 1023, a visual object 1005, a text 1025, and a button (e.g., a button 1027) in the screen 1020.

According to an embodiment, the electronic device 101 may display the visual object 1005 on the display (the display 320 of FIG. 3) to indicate an approximate location of the satellite.

According to an embodiment, in the screen 1000, the electronic device 101 may display the first indicator 1001 and the second indicator 1003 on the display 320. The difference between the location information of the electronic device 101 and the location information of the satellite may be within a reference range. Accordingly, the location of the satellite may be displayed in the screen 1000. The electronic device 101 may guide the first indicator 1001 and the second indicator 1003 to overlap each other. This is because the antenna of the electronic device 101 is disposed to face the satellite, when the first indicator 1001 and the second indicator 1003 overlap each other. According to an embodiment, in the screen 1000, the electronic device 101 may display text 1107 "Move your phone align satellite in a circle" on the display 320. According to an embodiment, in the screen 1000, the electronic device 101 may display the button 711 to quit the satellite search function on the display 160. When an input to the button 711 is identified, the electronic device 101 may stop the satellite search function. The electronic device 101 may display the button 711 for displaying a message on the display 320. When an input to the button 711 is identified, the electronic device 101 may display the message on the display 320.

According to an embodiment, in the screen 1010, the electronic device 101 may identify that the first indicator 1011 and the second indicator 1013 overlap each other on the screen. The electronic device 101 may change the state of the first indicator 1011 and the state of the second indicator 1013, based on identifying that the first indicator 1011 and the second indicator 1013 overlap each other on the screen. The electronic device 101 may display, on the screen 1010, arrangement information of an antenna of the electronic device 101 disposed toward the satellite through the state change of the indicator (e.g., the first indicator 1011 and/or the second indicator 1013). The state of the indicator may be identified based on the characteristics (e.g., color, transparency, shape, and complexity) of the indicator. For example, the color of the first indicator 1011 may be different from that of the first indicator 1001. For example, the shape of the second indicator 1013 may be different from that of the second indicator 1003. According to an embodiment, in the screen 1010, the electronic device 101 may display the text 1015 "To improve your signal, center the circle" on the display 320. According to an embodiment, in the screen 1010, the electronic device 101 may display the button 711 to quit the satellite search function on the display 320. When an input to the button 711 is identified, the electronic device 101 may stop the satellite search function. The electronic device 101 may display the button 711 for displaying a message on the display 320. When an input to the button 711 is identified, the electronic device 101 may display the message on the display 320.

According to an embodiment, in the screen 1020, the electronic device 101 may be in a state of transmitting a signal including the content of the message to the satellite. The electronic device 101 may change the state of the first indicator 1021 and the state of the second indicator 1023, based on identifying the state of transmitting the signal including the content of the message. According to an embodiment, in the screen 1020, the electronic device 101 may display the text 1025 "Maintain position to send and receive" on the display 320. According to an embodiment, in the screen 1020, the electronic device 101 may display the button 1027 to quit the satellite search function on the display 320. When an input to the button 1027 is identified, the electronic device 101 may stop the satellite search function.

The electronic device 101 may display, on the screen 1020, a state of transmitting a signal through the state change of the indicator. The state of the indicator may be identified based on the characteristics (e.g., color, transparency, shape, and complexity) of the indicator. For example, the color of the first indicator 1021 may be different from the color of the first indicator 1001. For example, the shape of the second indicator 1023 may be different from the shape of the second indicator 1003. For example, an object included in the second indicator 1023 may be displayed on the screen 1020 such that it rotates within an outline of the second indicator 1023.

While in FIG. 10, it is described that a message is transmitted or received on the screen 1020, the embodiments of the disclosure are not limited thereto. According to an embodiment, the strength of the signal in the state represented by the screen 1020 is greater than the strength of the signal in the state represented by the screen 1010 for comparison, so the message transmission and/or the message reception in the state represented by the screen 1020 may be more advantageous. However, despite such a more unfavorable communication environment, the electronic device 101 may transmit and/or receive messages even in the state represented by the screen 1010, for reasons such as an urgent transmission.

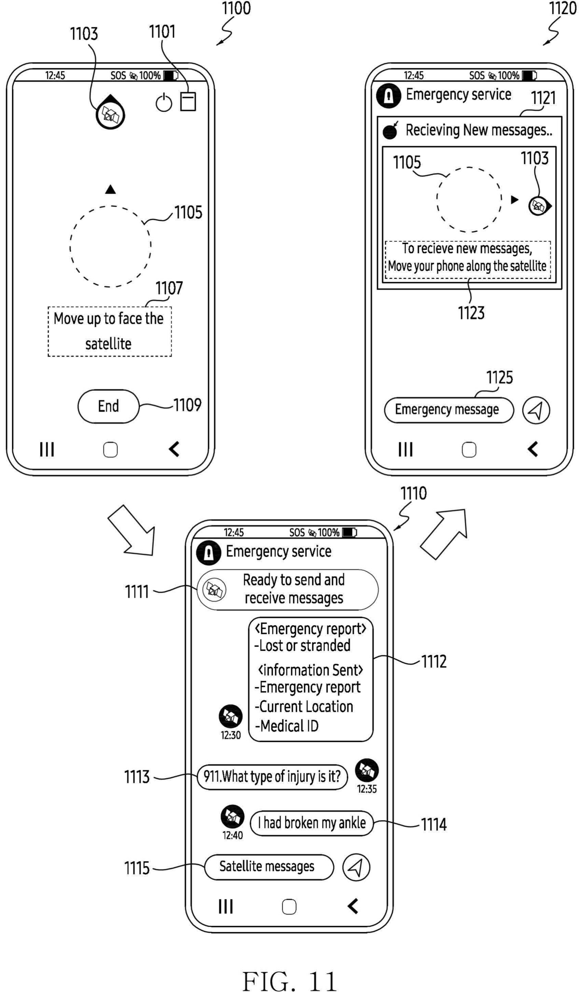

As described above, with reference to FIG. 10, description has been made of the user interface (UI) screen that represents overlapping of indicators. Hereinafter, a user interface (UI) screen after performing the satellite communication will be described in greater detail below with reference to FIG. 11.

FIG. 11 is a diagram illustrating an example of a screen after satellite communication is performed, according to various embodiments. The electronic device 101 described with reference to FIG. 11 may include the electronic device 101 of FIG. 1, FIG. 3, FIG. 4, FIG. 5, and/or FIG. 6. The operation of the electronic device described with reference to FIG. 2A, FIG. 2B, FIG. 2C, FIG. 7, FIG. 8, FIG. 9, and/or FIG. 10 may be performed by the electronic device 101 described with reference to FIG. 11.

Referring to FIG. 11, after transmitting and/or receiving a message through the satellite communication, the electronic device (e.g., the electronic device 101 of FIG. 1) may display the content related to the message on a screen (e.g., a screen 1100, a screen 1110, or a screen 1120). The electronic device 101 may include, in the screen 1100, an icon 1101 for identifying a message history, a first indicator 1103, a second indicator 1105, a text 1107, and a button 1109. The screen 1110 may represent a chat room for a satellite communication message. The screen 1120 may represent a chat room for the satellite communication message. The electronic device 101 may include an input window 1125 for inputting a new message and a confirmation window 1121 for guiding a direction of the electronic device 101, in the screen 1120 for a satellite communication chatting. The electronic device 101 may display the first indicator 1103 and the second indicator 1105 through the display (e.g., the display 320 of FIG. 3), in the confirmation window 1121.

According to an embodiment, after transmitting and/or receiving a message by the satellite communication, the screen 1100 may guide the direction of the electronic device 101 again for transmitting and/or receiving a new message. The electronic device (e.g., the electronic device 101 of FIG. 1) may display the screen 1100 on the display 320. The screen 1100 may include the icon 1101. The electronic device 101 may display a chat room where a user may identify a message history transmitted and/or received by a user input to the icon 1101. According to an embodiment, the electronic device 101 may display the first indicator 1103 on the display 320 to indicate a location of the satellite on the screen 1100. In the screen 1100, the electronic device 101 may display the second indicator 1105 on the display 320 to indicate the direction of the electronic device 101. According to an embodiment, in the screen 1100, the electronic device 101 may display the text 1107 "Move up to face the satellite" on the display 320. According to an embodiment, in the screen 1100, the electronic device 101 may display a button 1109 to quit satellite communication on the display 320. When an input to the button 1109 is identified, the electronic device 101 may terminate the satellite search function.

According to an embodiment, the screen 1110 may represent a chat room. The electronic device 101 may display a chat room where a user may identify a messaging history transmitted and/or received by a user input to the icon 1101. In response to the user input, the electronic device 101 may display a reduced overlay UI 1111. The overlay UI 1111 may indicate a message state through a satellite connection. For example, the overlay UI 1111 may display text "Ready to send and receive messages".

In the chat room, the electronic device 101 may display a report message 1112 indicating any emergency situation. For example, the report message 1112 may include a current situation (e.g., lost or stranded), a report of an emergency situation, a current location, medical identification information or the like. In the chat room, the electronic device 101 may display a query message 1113. The query message 1113 may include a text for querying a state of the user. For example, the query message 1113 may indicate the text "What type of injury is it?" In the chat room, the electronic device 101 may display a response message 1114. The response message 1114 may include a text corresponding to a response to the query message 1113. For example, the response message 1114 may indicate the text "I had broken my ankle". In the chat room, the electronic device 101 may display a chat window 1115 for transmitting a satellite message.

The electronic device 101 may display the screen 1120 based on receiving a user input to the overlay UI 1101. For example, according to the user input, the overlay UI 1101 may be enlarged, and a screen 1120 including a positioning UI may be displayed together with a progressing state message.

According to an embodiment, the screen 1120 may include a confirmation window 1121 for guiding a direction of the electronic device 101. Through the confirmation window 1121, the user may dispose the antenna of the electronic device 101 toward the satellite. A first indicator for indicating the location of the satellite and a second indicator for guiding the direction of the electronic device may be included in the confirmation window 1121. The user may input or check a message through the confirmation window 1121, without departing from the chat window.

According to an embodiment, the screen 1120 may include an input window 1125 for inputting a message. The user may use the input window 1125 to input a new message, while adjusting the direction of the electronic device 101.

According to an embodiment, in the screen 1120, the electronic device 101 may display the first indicator 1103 on the display 320 to indicate the location of the satellite. The electronic device 101 may display, in the screen 1120, the second indicator 1105 on the display 320 to indicate the direction of the electronic device 101. According to an embodiment, in the screen 1120, the electronic device 101 may display the text 1123 "To receive new messages, move your phone along the satellite" on the display 320.

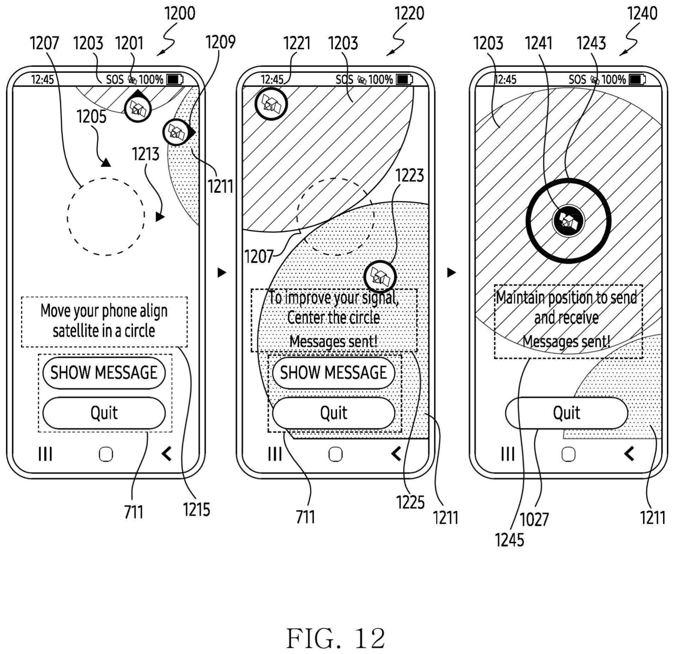

As described above, referring to FIG. 11, description has been made of the user interface (UI) screen after performing the satellite communication. Hereinafter, a user interface (UI) screen for a satellite communication with a plurality of satellites will be described in greater detail below with reference to FIG. 12.

FIG. 12 is a diagram illustrating an example of a guide screen for performing a satellite communication with a plurality of satellites according to various embodiments. The electronic device 101 described with reference to FIG. 12 may include the electronic device 101 of FIG. 1, FIG. 3, FIG. 4, FIG. 5, and/or FIG. 6. The operations of the electronic device described with reference to FIG. 2A, FIG. 2B, FIG. 2C, FIG. 7, FIG. 8, FIG. 9, FIG. 10, and/or FIG. 11 may be performed by the electronic device 101 described with reference to FIG. 12.

Referring to FIG. 12, the electronic device (e.g., the electronic device 101 of FIG. 1) may display a guide screen (e.g., a screen 1200, a screen 1220, a screen 1240) for a satellite communication with a plurality of satellites on a display (e.g., the display 320 of FIG. 3). The screen 1200 may include, for guiding a designated area, a first portion 1207 of a second indicator, a first indicator 1201 for a first satellite, a second portion 1205 of the second indicator for the first satellite, a visual object 1203 for the first satellite, a first indicator 1209 for a second satellite, a third portion 1213 of the second indicator for the second satellite, and a visual object 1211, text 1215, and a button 711 for the second satellite. The screen 1220 may include, for guiding a designated area, a first portion 1207 of a second indicator, a first indicator 1221 for the first satellite, a visual object 1203 for the first satellite, a first indicator 1223 for the second satellite, a visual object 1211 for the second satellite, text 1225, and a button 711. The screen 1240 may include, for guiding a designated area, a first portion 1243 of a second indicator, a first indicator 1241 for a first satellite, a visual object 1203 for the first satellite, a visual object 1211 for a second satellite, a text 1245, and a button 1027. The first portion (e.g., the first portion 1207, the first portion 1243) of the second indicator may include a visual object (e.g., a circular object) for guiding a direction of the electronic device 101, when the satellite corresponds to a point within the screen. The second portion (e.g., the second portion 1205) and the third portion (e.g., the third portion 1213) of the second indicator may include a visual object (e.g., an arrow-shaped object) for guiding the direction of the electronic device 101, when the satellite corresponds to a point out of the screen.

According to an embodiment, the electronic device 101 may communicate with a plurality of satellites. The electronic device 101 may display information about the plurality of satellites on the screen. The user may select one of the plurality of satellites to position the antenna of the electronic device 101 toward the selected satellite. Hereinafter, the screen for guiding a direction of the electronic device 101 and information about a plurality of satellites will be described.

According to an embodiment, the indicator (e.g., the first indicator 1201, the first indicator 1221, the first indicator 1241, the second indicator 1205) and the visual object (e.g., the visual object 1203) corresponding to the first satellite, and the indicator (e.g., the first indicator 1209, the first indicator 1223, the third portion 1213 of the second indicator) and the visual object (e.g., the visual object 1211) corresponding to the second satellite may be displayed on the display 320 to have different characteristics (e.g., color, transparency). For example, the characteristics (e.g., color, transparency) of the first indicator for the first satellite may be different from the characteristics (e.g., color, transparency) of the first indicator for the second satellite. For example, the characteristics (e.g., color, transparency) of the second indicator for the first satellite may be different from the characteristics (e.g., color, transparency) of the second indicator for the second satellite. For example, the characteristics (e.g., color, transparency) of the visual object for the first satellite may be different from the characteristics (e.g., color, transparency) of the visual object for the second satellite.

According to an embodiment, the screen 1200 may include the indicators for the first satellite and the indicators for the second satellite. In the screen 1200, the electronic device 101 may display the first indicator 1201 based on the direction information of the first satellite and the direction information of the electronic device 101. The screen 1200 may include the second indicator 1205 for guiding the direction of the electronic device 101. In the screen 1200, the electronic device 101 may display the first indicator 1209 based on the direction information of the second satellite and the direction information of the electronic device 101. The screen 1200 may include the third portion 1213 of the second indicator for guiding the direction of the electronic device 101. The user may change the direction of the electronic device 101 based on the direction information of the first satellite or the direction information of the second satellite. The electronic device 101 may display the text 1215 "Move your phone align satellite in a circle" on the display 320. In the screen 1200, the electronic device 101 may display the button 711 to quit the satellite search function on the display 320. When an input to the button 711 is identified, the electronic device 101 may stop the satellite search function. In the screen 1200, the electronic device 101 may display on the display 320 the button 711 for identifying a written message. When an input to the button 711 is identified, the electronic device 101 may display the message on the display 320.

According to an embodiment, the screen 1220 may include the first indicator 1221 in a changed state and the first indicator 1223 in a changed state. The screen 220 may include the visual object 1203 corresponding to the first satellite and the visual object 1211 corresponding to the second satellite. Based on the change in the direction of the electronic device 101, the location information of the satellites (e.g., the first satellite and the second satellite) with respect to the electronic device 101 may be included within a specified range. Based on identifying that the location information of the satellite (e.g., the first satellite and the second satellite) with respect to the electronic device 101 is within the specified range, the state of the first indicator 1221 may be changed (e.g., changed from the first indicator 1201 to the first indicator 1221 or changed from the first indicator 1209 to the first indicator 1223). By a change in the state of the first indicator (e.g., the first indicator 1221, the first indicator 1223), the electronic device 101 may visually transmit the change in the location information of the satellite with respect to the electronic device 101 to the user.

According to an embodiment, the electronic device 101 may display the text 1225 "To improve your signal, center the circle" on the display 320. In the screen 1220, the electronic device 101 may display the button 711 to quit the satellite search function on the display 320. When an input to the button 711 is identified, the electronic device 101 may stop the satellite search function. In the screen 1220, the electronic device 101 may display the button 711 for identifying a written message on the display 320. When an input to the button 711 is identified, the electronic device 101 may display the message on the display 320.

According to an embodiment, the screen 1240 may include the first indicator 1241 in a changed state and the first portion 1243 of the second indicator in a changed state. The electronic device 101 may change the state of the first indicator 1241 (e.g., change from the first indicator 1221 to the first indicator 1241), based on identifying the first portion 1243 of the second indicator overlapping the first indicator 1241 on the screen 1240. The change in the state of the first indicator 1241 may visually provide information about the direction of placement of the antenna. According to an embodiment, the electronic device 101 may change the state of the first portion 1243 of the second indicator (e.g., change from the first portion 1207 of the second indicator to the first portion 1243 of the second indicator), based on identifying the first portion 1243 of the second indicator overlapping the first indicator 1241 on the screen 1240. The change in the state of the first portion 1243 of the second indicator may visually provide the user with information about the direction of placement of the antenna.

According to an embodiment, the electronic device 101 may display the text 1245 "Maintain position to send and receive" on the display 320. In the screen 1240, the electronic device 101 may display the button 1027 to quit stopping the satellite search function on the display 320. When an input to the button 1027 is identified, the electronic device 101 may stop the satellite search function.

As described above, referring to FIG. 12, the user interface (UI) screen for the satellite communication for a plurality of satellites has been described. Hereinafter, an operation of an electronic device for identifying a position of an indicator will be described in greater detail below with reference to FIG. 13.

FIG. 13 is a diagram illustrating an example of an operation of an electronic device for identifying a position of an indicator according to various embodiments. The electronic device 101 described with reference to FIG. 13 may include the electronic device 101 of FIG. 1, FIG. 3, FIG. 4, FIG. 5, and/or FIG. 6. The operations of the electronic device described with reference to FIG. 2A, FIG. 2B, FIG. 2C, FIG. 7, FIG. 8, FIG. 9, FIG. 10, FIG. 11, and/or FIG. 12 may be performed by the electronic device 101 described with reference to FIG. 13.

Referring to FIG. 13, the electronic device (e.g., the electronic device 101 of FIG. 1) may display a screen 1300 for guiding a direction of the electronic device 101 through a display (e.g., the display 320 of FIG. 3). The screen 1300 may include a first indicator 1305 for a satellite and a second indicator 1301 for the satellite. A length of the screen 1300 in the first direction may be a screen length 1307. A length of the screen 1300 in the second direction perpendicular to the first direction may be a screen length 1309. The electronic device 101 may identify a position 1303 of the satellite on an extended map 1311 in order to identify the location information of the satellite with respect to the electronic device 101. A length of the extended map 1311 in the first direction may include a length of the extended map 1313. The length of the extended map 1311 in the second direction perpendicular to the first direction may include the length of the extended map 1315.

According to an embodiment, the electronic device 101 may identify the location information of the satellite with respect to the electronic device 101. In case where the location information of the satellite with respect to the electronic device 101 is within a specified range, the electronic device 101 may display a first indicator (e.g., the first indicator 1221 or the first indicator 1223 of FIG. 12) indicating a position of the satellite on the display 320. For example, in case that an absolute value of a difference between the elevation angle information of the electronic device 101 and the elevation angle information of the satellite is within the specified angle (e.g., about +45 degrees) and an absolute value of a difference between the azimuth information of the electronic device 101 and the azimuth information of the satellite is within the specified angle (e.g., about +45 degrees), the electronic device 101 may display the first indicator (1221, 1223) corresponding to a position of the satellite within the display 320.

According to an embodiment, in case where the location information of the satellite is out of the specified range, the electronic device 101 may display the first indicator 1305 indicating the position of the satellite on the display 320. The first indicator 1305 may be displayed on a line extending to connect the center point of the screen 1300 and the location 1303 of the satellite on the extended map 1311. The first indicator 1305 may be displayed at an edge end part of the screen 1300 where the line meets the screen 1300.

According to an embodiment, in the direction information of the electronic device 101 described with reference to FIG. 13, the azimuth information may be about +45 degrees, and the elevation angle information may be about +45 degrees. The electronic device 101 may be in a state of being disposed based on the direction information. According to an embodiment, the electronic device 101 may identify the position 1303 of the satellite on the extended map 1311 to identify the location information of the satellite with respect to the electronic device 101. For example, first directional coordinates on the extended map 1311 for the satellite may be identified based on the azimuth of the satellite. For example, second directional coordinates on the extended map 1311 for the satellite may be identified based on the elevation angle of the satellite.

According to an embodiment, the electronic device 101 may display, on the display 320, objects included within a range of about 90 degrees in the first direction with respect to the direction information of the electronic device 101. The electronic device 101 may display, on the display 320, objects included within a range of about 90 degrees in the second direction with respect to the direction information of the electronic device 101. In other words, the electronic device 101 may display, in the screen, a satellite in which an absolute value of a difference between the azimuth information of the electronic device 101 and the azimuth information of the satellite is less than about 45 degrees and an absolute value of a difference between the elevation angle information of the electronic device 101 and the elevation angle information of the satellite is less than about 45 degrees. When the satellite cannot be displayed within the screen, the electronic device 101 may display the direction information of the satellite with respect to the electronic device 101 on the screen. The electronic device 101 may display a position of the satellite on the extended map 1311 to identify the direction information of the satellite with respect to the electronic device 101.

According to an embodiment, the extended map 1311 should include all satellites having an azimuth in a range of about 0 degrees to about 360 degrees, and all satellites having an elevation angle in a range of about 0 degrees to about 360 degrees. Therefore, according to an embodiment, the lower limit in the first direction of the extended map 1311 may correspond to an azimuth of about -135 degrees so as to display a satellite having an azimuth that is different by about -180 degrees from the azimuth information (about +45 degrees) of the electronic device 101. The upper limit in the first direction of the extended map 1311 may correspond to an azimuth of about + 225 degrees so as to display a satellite having an azimuth that is different by about +180 degrees from the azimuth information (about +45 degrees) of the electronic device 101. According to an embodiment, the lower limit in the second direction of the extended map 1311 may correspond to an elevation angle of about -135 degrees so as to display a satellite having an elevation angle that is different by about -180 degrees from the elevation angle information (about +45 degrees) of the electronic device 101. The upper limit in the second direction of the extended map 1311 may correspond to an elevation angle of about +225 degrees so as to display a satellite having an elevation angle that is different by about +180 degrees from the elevation angle information (about +45 degrees) of the electronic device 101.

According to an embodiment, the extended map length 1313 may be substantially four times the length of the screen 1307. This is because the electronic device 101 may display a space in the range of about 90 degrees through the screen. For example, when the screen length 1307 is about 1080 pixels, the extended map length 1313 may be about 4320 pixels. According to an embodiment, the extended map length 1315 may be about four times the length of the screen 1309. This is because the electronic device 101 may display a space in the range of about 90 degrees through the screen. For example, when the screen length 1309 is about 1337 pixels, the extended map length 1315 may be about 5348 pixels.

According to an embodiment, in order to display the location information of the satellite with respect to the electronic device 101, the electronic device 101 may identify a position of the first indicator in the first direction on the display 320, based on the difference between the azimuth information of the electronic device 101 and the azimuth information of the satellite. For example, referring to a diagram 1320, when the azimuth of the satellite is of an angle A and the azimuth of the electronic device 101 is of an angle B, a distance in the first direction between the satellite and the center point of the screen 1300 on the extended map 1311 may be as follows:

$$(A-B) / 360 \text{ degrees} \times (\text{Extended Map Length } 1313).$$

In an example, when the azimuth of the satellite is about + 352 degrees and the azimuth of the electronic device 101 is about + 244 degrees, a distance in the first direction between the satellite and the electronic device 101 on the extended map 1311 may be about 1296 pixels as follows:

$$(352 \text{ degree} - 244 \text{ degrees}) / 360 \text{ degrees} \times 4320 \text{ pixels}.$$

According to an embodiment, in order to display the location information of the satellite with respect to the electronic device 101, the electronic device 101 may identify the position of the first indicator on the display 320 in the second direction perpendicular to the first direction, based on the difference between the elevation angle information of the electronic device 101 and the elevation angle information of the satellite. For example, when the elevation angle of the satellite is of an angle C and the elevation angle of the electronic device 101 is of an angle D, a distance in the second direction between the satellite and the center point of the screen 1300 on the extended map 1311 may be as follows:

$$(C-D) / 360 \text{ degrees x (Extended Map Length 1315).}$$

In an example, when the elevation angle of the satellite is about -59 degrees and the elevation angle of the electronic device 101 is about +40 degrees, a distance in the second direction distance between the satellite and the electronic device 101 on the extended map 1311 may be about 1470.7 pixels as follows:

$$(40 \text{ degrees} - (-59 \text{ degrees})) / 360 \text{ degrees x 5348 pixels.}$$

According to an embodiment, the electronic device 101 may identify the direction indicated by the first indicator 1305, based on the distance in the first direction and the distance in the second direction. For example, when the distance in the first direction and the distance in the second direction are substantially the same as each other, the first indicator 1305 of the electronic device 101 may point to about +45 degrees above with respect to the first direction.

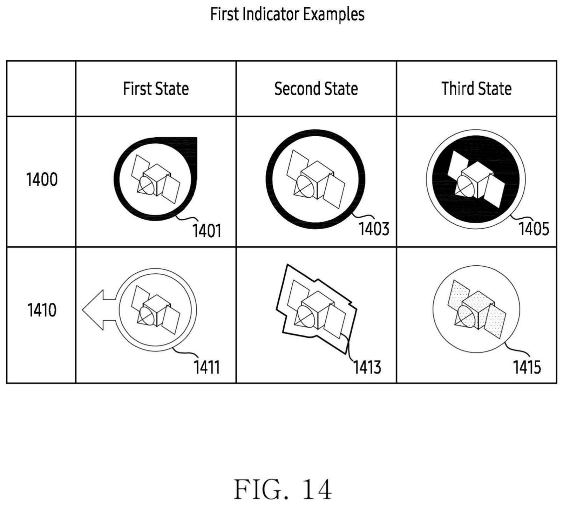

As described above, with reference to FIG. 13, description has been made of the operation of the electronic device for identifying the position of the indicator. Hereinafter, an indicator state according to a relative position of a satellite and an electronic device will be described in greater detail below with reference to FIG. 14.

FIG. 14 is a diagram illustrating examples of an indicator state according to a relative position of a satellite and an electronic device according to various embodiments.

Referring to FIG. 14, a first row 1400 may indicate a state change of a first indicator according to location information of the satellite with respect to the electronic device (e.g., the electronic device 101 of FIG. 1). The first row 1400 may include a first indicator 1401 according to a first state, a first indicator 1403 according to a second state, and a first indicator 1405 according to a third state. A second row 1410 may indicate a state change of the first indicator according to the location information of the satellite with respect to the electronic device 101. The second row 1410 may include a first indicator 1411 according to a first state, a first indicator 1413 according to a second state, and a first indicator 1415 according to a third state. However, the embodiments of the disclosure may not be limited thereto.

According to an embodiment, in the first state, the satellite may not be included in the screen displayed through the display (the display 320 of FIG. 3). When the absolute value of the difference between the azimuth information of the electronic device 101 and the azimuth information of the satellite exceeds a reference angle, or when the absolute value of the difference between the elevation angle information of the electronic device 101 and the elevation angle information of the satellite exceeds the reference angle, the satellite may not be included in the screen. In the first state, the first indicator may indicate the location of the satellite on an extended map (e.g., the extended map 1311 of FIG. 13). For example, the first indicator 1401 and/or the first indicator 1411 may indicate the location of the satellite on the extended map.

According to an embodiment, in the second state, a satellite may be included in the screen displayed through the display 320, but the first indicator and the second indicator may not overlap each other on the screen. When the absolute value of the difference between the azimuth information of the electronic device 101 and the azimuth information of the satellite is less than or equal to the reference angle, and the absolute value of the difference between the elevation angle information of the electronic device 101 and the elevation angle information of the satellite is less than or equal to the reference angle, the satellite may be included in the screen. The screen may include the first indicator (e.g., the first indicator 1403, the first indicator 1413) in the changed state. For example, the first indicators 1403 and 1413 may indicate the location information of the satellite. The first indicator 1403 and/or the first indicator 1413 may indicate a position of the satellite on the screen (e.g., the screen 1300 of FIG. 13). Through a change in the state of the first indicator (e.g., change from the first indicator 1401 to the first indicator 1403 or change from the first indicator 1411 to the first indicator 1413), the electronic device 101 may visually transmit the change in the location information of the satellite with respect to the electronic device 101 to the user. For example, the size of the first indicators 1401 and 1411 in the first state may be less than the size of the first indicators 1403 and 1413 in the second state. The first indicators 1401 and 1411 in the first state may point to a certain point out of the screen. The first indicator (1403, 1413) in the second state may indicate a point within the screen.

According to an embodiment, in the third state, the first indicator (e.g., the first indicator 1405 and/or the first indicator 1415) and the second indicator (e.g., the first portion 1207 of the second indicator of FIG. 12) may overlap each other. The satellite may be included in the screen displayed through the display 320, and the first indicator 1405, 1415 and the second indicator 1207 may overlap each other on the screen. When the first indicator (1405, 1415) and the second indicator 1207 overlap each other on the screen, the antenna included in the electronic device 101 may be disposed to face the satellite. In other words, a distance between the antenna and the satellite in case where the first indicator (1405, 1415)

and the second indicator 1207 overlap each other on the screen may be less than a distance between the antenna and the satellite in case where the first indicator (1405, 1415) and the second indicator 1207 are spaced apart from each other on the screen.

According to an embodiment, the electronic device 101 may change the state of the first indicator, based on identifying the second indicator 1207 overlapping the first indicators (1403, 1413) on the screen. The electronic device 101 may visually provide information about the direction of placement of the antenna of the electronic device 101, through the change in the state of the first indicator (e.g., change from the first indicator 1403 to the first indicator 1405 or change from the first indicator 1413 to the first indicator 1415).

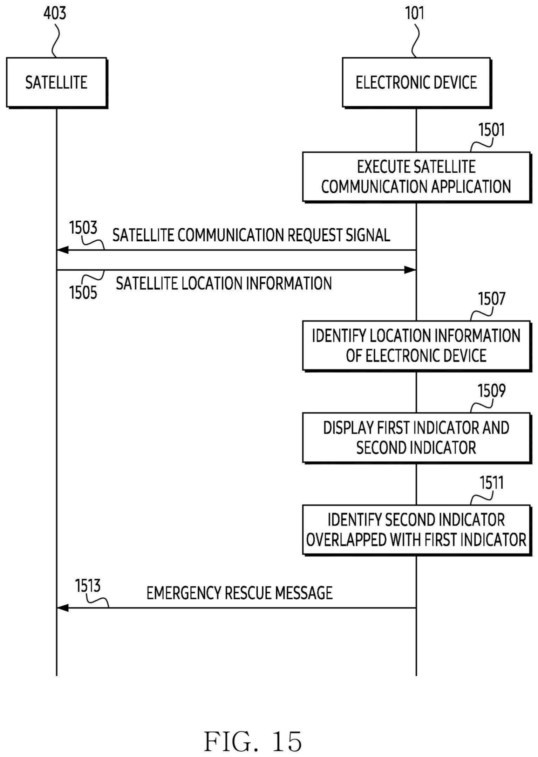

As described above, referring to FIG. 14, the indicator state according to the relative position of the satellite and the electronic device has been described. Hereinafter, signaling between a satellite and an electronic device for transmitting a message through a satellite communication application will be described in greater detail below with reference to FIG. 15.

FIG. 15 is a signal flow diagram illustrating an example of signaling between a satellite and an electronic device for transmitting a message through a satellite communication application according to various embodiments. The electronic device 101 of FIG. 15 may include the electronic device 101 of FIG. 1, FIG. 3, FIG. 4, FIG. 5, and/or FIG. 6. The operation of the electronic device described with reference to FIG. 2A, FIG. 2B, FIG. 2C, and FIGS. 7 to 14 may be performed by the electronic device 101 of FIG. 13.

Referring to FIG. 15, according to an embodiment, in operation 1501, the electronic device 101 may execute a satellite communication application. A satellite communication method may be useful in case where it is difficult for a cellular communication or a network communication requiring a base station to operate due to its geographical location. For example, while the terrestrial network is in an idle state, the electronic device 101 may provide an emergency rescue service, using a connection with the satellite 403 via a communication circuit.

According to an embodiment, in operation 1503, the electronic device 101 may transmit a satellite communication request signal to the satellite 403. The satellite communication request signal may be configured to cause the electronic device 101 to request a set of information necessary for performing a satellite communication from the satellite 403. For example, the electronic device 101 may transmit an uplink signal to the satellite 403 or may receive a downlink signal from the satellite 403, based on the satellite communication request signal.

According to an embodiment, the satellite communication request signal may include a location information request signal of the satellite 403. The electronic device 101 may transmit the location information request signal to the satellite 403 through the communication circuit. The electronic device 101 may obtain the location information of the satellite 403 through the satellite information application. The satellite information application may transmit a location of a neighboring satellite 403 to an application for satellite communication.

According to an embodiment, in operation 1505, the electronic device 101 may receive the location information of the satellite 403 from the satellite 403. For example, the location information of the satellite 403 may include information related to latitude, information related to longitude, and/or information related to elevation angle (altitude). According to an embodiment, the direction information of the satellite 403 identified based on the location information of the satellite 403 may include information related to an azimuth of the satellite 403 and information related to an elevation angle of the satellite 403. For example, the electronic device 101 may receive the location information of the satellite 403 broadcast from the satellite 403. Although the location information of the satellite 403 is illustrated in FIG. 15, the embodiments of the disclosure are not limited thereto. According to an embodiment, the location information of the satellite 403 as well as the information required for the satellite communication (e.g., satellite identification information or system information for satellite communication connection) may be provided to the electronic device 101.

According to an embodiment, in operation 1507, the electronic device 101 may identify the location information of the electronic device 101. The electronic device 101 may identify the location information of the electronic device 101 through a sensor. For example, the sensor may include a global positioning system (GPS) sensor. For example, the sensor may include a gyro sensor or an acceleration sensor.

According to an embodiment, in operation 1509, the electronic device 101 may display a first indicator and a second indicator. According to an embodiment, the electronic device 101 may identify the direction information of the satellite 403, based on the location information of the satellite 403 and the location information of the electronic device 101. The electronic device 101 may identify the direction information of the electronic device 101 through the sensor. The electronic device 101 may identify positions of the first indicator and a direction of the second indicator, based on the direction information of the satellite 403 and the direction information of the electronic device 101. The first indicator may indicate the location information of the satellite 403. The second indicator may guide the direction of the electronic device 101.

According to an embodiment, in operation 1511, the electronic device 101 may identify the second indicator overlapping the first indicator. According to an embodiment, the user may change the direction information of the electronic device 101 such that the first indicator and the second indicator overlap each other on the screen. The overlapping of the first indicator and the second indicator on the screen may represent that the antenna of the electronic device 101 is positioned toward the satellite 403.

According to an embodiment, in operation 1513, the electronic device 101 may transmit an emergency rescue message to the satellite 403. When the antenna of the electronic device 101 is positioned to face the satellite 403, the electronic device 101 may transmit a signal including the content of the emergency rescue message to the satellite 403 via the satellite communication.

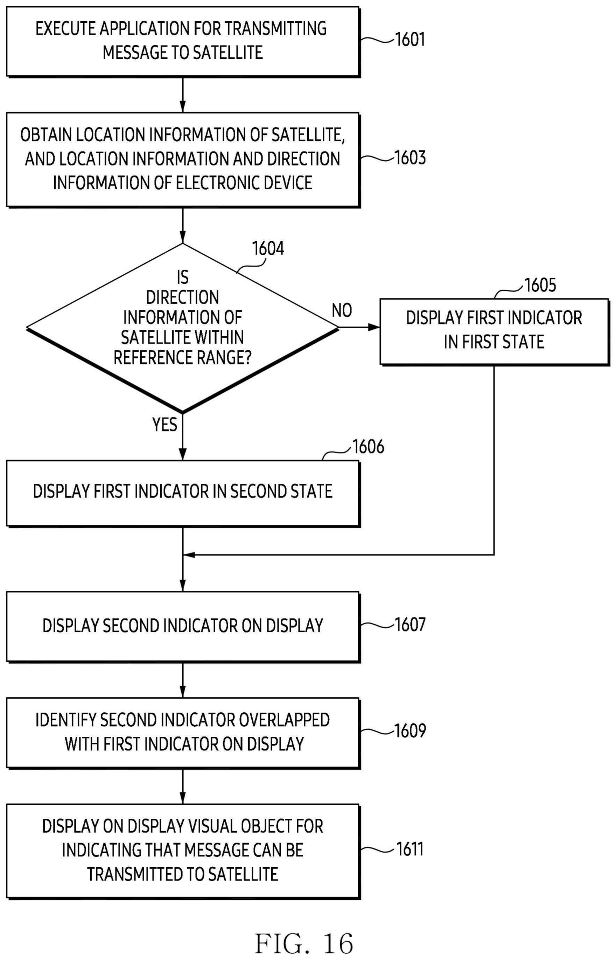

As described above, referring to FIG. 15, the signaling between the satellite 403 and the electronic device 101 for transmitting messages through the satellite communication application has been described. Hereinafter, an example operation of the electronic device for providing a guide for the direction of the electronic device will be described in greater detail below with reference to FIG. 16.

FIG. 16 is a flowchart illustrating an example operation of an electronic device for providing a guide for a relative position between the satellite and the electronic device, according to various embodiments. The electronic device performing the operation of FIG. 16 may include the electronic device 101 of FIG. 1, FIG. 3, FIG. 4, FIG. 5, and/or FIG. 6. The electronic device described with reference to FIG. 2A, FIG. 2B, FIG. 2C, and FIGS. 7 to 14 may perform the operation of FIG. 16. The operation of FIG. 15 may be performed by the electronic device performing the operation of FIG. 16.

Referring to FIG. 16, according to an embodiment, in operation 1601, the electronic device (e.g., the electronic device 101 of FIG. 1) may execute an application for transmitting a message to the satellite. The electronic device 101 may provide an emergency rescue service, using a connection with the satellite via a communication circuit, in an idle state of the terrestrial network.

According to an embodiment, in operation 1603, the electronic device 101 may obtain the location information of the satellite, and the location information and/or the direction information of the electronic device 101. The electronic device 101 may receive the location information of the satellite from the satellite through the communication circuit. However, the embodiments of the disclosure may not be limited thereto. According to an embodiment, the electronic device 101 may obtain the location information of the satellite through a satellite information application. The electronic device 101 may obtain the location information of a neighboring satellite through the satellite information application. The location information of the satellite may include information related to latitude, information related to longitude, and/or information related to altitude. The direction information of the satellite may be identified based on the location information of the satellite and the location information of the electronic device 101. The location information of the electronic device 101 may be identified through a sensor. For example, the sensor may include a global positioning system (GPS) sensor. For example, the sensor may include a gyro sensor and an acceleration sensor. According to an embodiment, the direction information of the electronic device 101 may be identified through a sensor of the electronic device 101. For example, the sensor may include a gravity sensor. For example, the sensor may include an inclination sensor. However, the embodiments of the disclosure may not be limited thereto. The direction information of the electronic device 101 may include azimuth information (507, 557) and elevation angle information (501, 551) of the electronic device 101.

According to an embodiment, in operation 1604, the electronic device 101 may identify whether the direction information of the satellite is within a reference range. When the direction information of the satellite is within the reference range (yes in 1604), the electronic device 101 may perform operation 1606. When the direction information of the satellite is out of the reference range (no in 1604), the electronic device 101 may perform operation 1605. According to an embodiment, the direction information of the satellite may include elevation angle information of the satellite and azimuth information of the satellite. The reference range may refer to an area where the difference between the elevation angle information of the satellite and the elevation angle information of the electronic device 101 is within a reference angle range (e.g., -45 degrees or more and less than +45 degrees), and the difference between the azimuth information of the satellite and the azimuth information of the electronic device 101 is within the reference angle range (e.g., about -45 degrees or more and less than about +45 degrees).

According to an embodiment, in operation 1605, the electronic device 101 may display the first indicator in the first state on the display. The first indicator may be displayed based on identifying a satellite corresponding to a point out of the screen. The first indicator may point to a certain point out of the screen.

According to an embodiment, in operation 1606, the electronic device 101 may display the first indicator in the second state on the display. The first indicator may be displayed based on identifying a satellite corresponding to a point within the screen. The first indicator may indicate a certain point within the screen.

According to an embodiment, in operation 1607, the electronic device 101 may display the second indicator on the display. The second indicator may be identified based on the difference between the direction information of the satellite and the direction information of the electronic device 101.

According to an embodiment, in operation 1609, the electronic device 101 may identify the second indicator overlapping the first indicator on the display. According to an embodiment, the user may change the direction information of the electronic device 101 such that the first indicator and the second indicator overlap each other on the screen. This is because the antenna may be positioned toward the satellite, when the first indicator and the second indicator overlap each other on the screen.

According to an embodiment, in operation 1611, the electronic device 101 may display, on the display, a visual object for indicating that a message can be transmitted to the satellite. Since the antenna is positioned toward the satellite, the electronic device 101 may perform the satellite communication.

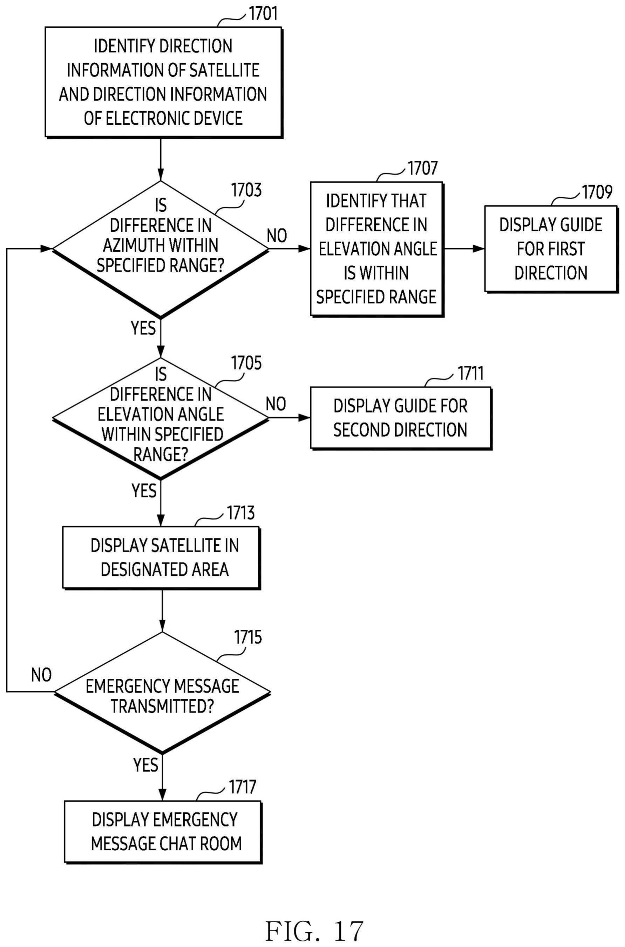

As described above, referring to FIG. 16, the flow of the operation of the electronic device for providing a guide for the direction of the electronic device has been described. Hereinafter, an example operation of an electronic device for location information of a satellite and location information of the electronic device will be described in greater detail below with reference to FIG. 17.

FIG. 17 is a flowchart illustrating an example operation of the electronic device for the location information of the satellite and the location information of the electronic device, according to various embodiments. The electronic device performing the operation of FIG. 17 may include the electronic device 101 of FIG. 1, FIG. 3, FIG. 4, FIG. 5, and/or FIG. 6. The electronic device described with reference to FIG. 2A, FIG. 2B, FIG. 2C, and FIGS. 7 to 14 may perform the operation of FIG. 17. The operations of FIGS. 15 to 16 may be performed by the electronic device performing the operation of FIG. 17.

Referring to FIG. 17, according to an embodiment, in operation 1701, the electronic device (e.g., the electronic device 101 of FIG. 1) may identify the direction information of the satellite and the direction information of the electronic device. The direction information of the satellite may be identified based on the location information of the satellite and the location information of the electronic device 101. The direction information of the electronic device 101 may be identified based on a sensor.

According to an embodiment, in operation 1703, the electronic device 101 may identify whether the difference in azimuth is within a specified range. When the difference in azimuth is within the specified range (yes in 1703), the electronic device 101 may perform operation 1705. When the difference in azimuth is out of the specified range (no in 1703), the electronic device 101 may perform operation 1707. The difference in azimuth may be a difference between the azimuth information of the electronic device 101 and the azimuth information of the satellite. The electronic device 101 may identify whether the difference in azimuth is within the specified range (e.g., from about -45 degrees to about +45 degrees).

According to an embodiment, in operation 1707, the electronic device 101 may identify that the difference in the elevation angle is within a specified range. The difference in the elevation angle may be a difference between the elevation angle information of the electronic device 101 and the elevation angle information of the satellite. The electronic device 101 may identify whether the azimuth range is within the specified range (e.g., from about -45 degrees to about +45 degrees). When the difference in the azimuth is out of the specified range and the difference in the elevation angle is within the specified range, the user may rotate the electronic device 101 in a direction in which the absolute value of the difference in the azimuth is to be reduced. When the electronic device 101 is rotated in the direction in which the absolute value of the difference in azimuth is to be reduced, the location of the satellite relative to the location of the electronic device 101 may be changed to within the specified range. Therefore, the direction of the electronic device 101 guided through the screen may be the first direction. The first direction may be a direction such that the absolute value of the difference between the azimuth information of the electronic device 101 and the azimuth information of the satellite is reduced.

According to an embodiment, in operation 1709, the electronic device 101 may display an object for guiding the first direction. The first direction (e.g., -x-axis direction of FIG. 8 or +x-axis direction of FIG. 9) may indicate a direction in which the absolute value of the difference between the azimuth information of the electronic device 101 and the azimuth information of the satellite is to be reduced. The guide may indicate a direction for disposing the electronic device 101 such that the antenna faces the satellite. The electronic device 101 may display an object for guiding the first direction through the second indicator.

According to an embodiment, in operation 1705, the electronic device 101 may identify whether the difference in the elevation angle is within a specified range. When the difference in the elevation angle is out of the specified range (no in 1705), the electronic device 101 may perform operation 1711. When the difference in the elevation angle is within the specified range (yes in 1705), the electronic device 101 may perform operation 1713. The difference in the elevation angle may be a difference between the elevation angle information of the electronic device 101 and the elevation angle information of the satellite. The electronic device 101 may identify whether the difference in the elevation angle is within the specified range (e.g., from about -45 degrees to about +45 degrees).

According to an embodiment, in operation 1711, the electronic device 101 may display an object for guiding the second direction. The second direction (e.g., the upward direction or the downward direction of FIG. 7) may indicate a direction in which the absolute value of the difference between the elevation angle information of the electronic device 101 and the elevation angle information of the satellite is to be reduced. The guide may indicate a direction for disposing the electronic device 101 such that the antenna faces the satellite. When the difference in the azimuth is within the specified range and the difference in the elevation angle is out of the specified range, the user may rotate the electronic device 101 in a direction in which the absolute value of the difference in the elevation angle is to be reduced. When the electronic device 101 rotates in the direction in which the difference in the elevation angle decreases, the location of the satellite with respect to the electronic device 101 may be changed to within the specified range. Therefore, the direction of the electronic device 101 guided through the screen may be the second direction perpendicular to the first direction. The second direction may be a direction in which the absolute value of the difference between the elevation angle information of the electronic device 101 and the elevation angle information of the satellite is reduced. The electronic device 101 may display an object for guiding the second direction through the second indicator. The second direction may be perpendicular to the first direction.

According to an embodiment, in operation 1713, the electronic device 101 may display the satellite in a designated area. The designated area may be an area indicated by the second indicator. When the electronic device 101 displays the satellite within the designated area, the antenna of the electronic device 101 may be positioned to face the satellite. The user may adjust the direction of the electronic device 101 so that the satellite may be displayed within the designated area displayed by the second indicator. When the satellite is displayed within the designated area, the antenna of the electronic device 101 may be arranged to face the satellite. When the antenna of the electronic device 101 is positioned to face the satellite, the electronic device 101 may transmit a signal including a content of an emergency message to the satellite.

According to an embodiment, in operation 1715, the electronic device 101 may identify whether the emergency message has been transmitted. When the emergency message is transmitted (yes in 1715), the electronic device 101 may perform operation 1717. When the emergency message is not transmitted (no in 1715), the electronic device 101 may perform operation 1703. The electronic device 101 may identify whether the emergency rescue message has been transmitted to the satellite. When the emergency message is not transmitted, the electronic device 101 may identify the position of the first indicator and the second indicator again.

According to an embodiment, in operation 1717, the electronic device 101 may display an emergency message chat room. After transmitting and/or receiving a message through the satellite communication, the electronic device 101 may display the content related to the message on a screen. The electronic device 101 may obtain a user input to an icon for identifying the details of the message displayed on the screen. Based on the user input, the electronic device 101 may indicate a chat room for the satellite communication message. The screen for the satellite communication chatting may include an input window for inputting a new message and a confirmation window for guiding the direction of the electronic device 101.

In embodiments, an electronic device 101 is provided. The electronic device 101 may comprise a display 320 and a processor 310. The processor 310 may be configured to, based on execution of an application for transmitting a message to a satellite, obtain location information of the satellite, location information of the electronic device 101, and direction information of the electronic device 101. The processor 310 may be configured to identify the location information of the electronic device 101 and the direction information of the satellite according to the location information of the satellite. The processor 310 may be configured to display, on the display 320, a first indicator in a first state for indicating a location of the satellite in case that a difference between the direction information of the electronic device 101 and the direction information of the satellite is out of a reference range. The processor 310 may be configured to display the first indicator in a second state different from the first state on the display 320 to indicate the location of the satellite when the difference between the direction information of the electronic device 101 and the direction information of the satellite is within the reference range. The processor 310 may be configured to display, on the display 320, a second indicator (703, 705, 715, 725, 735, 803, 813, 823, 1003, 1013, 1023) for guiding a direction of the electronic device 101. The processor 310 may be configured to identify the second indicator (703, 705, 715, 725, 735, 803, 813, 823, 1003, 1013, 1023) overlapping the first indicator (701, 801, 811, 821, 1001, 1011, 1021) on the screen displayed through the display 320, due to the change in the direction of the electronic device 101. The processor 310 may be configured to display, on the display 320, information notifying that a communication with the satellite is available, based on identification of the second indicator (703, 705, 715, 725, 735, 803, 813, 823, 1003, 1013, 1023) overlapping the first indicator (701, 801, 811, 821, 1001, 1011, 1021) on the screen. The direction information of the satellite may include height information and distance information of the satellite.

According to an embodiment, the information notifying that the communication is available may include a visual object for indicating that a message can be transmitted to the satellite.

According to an embodiment, the visual object may include at least one of the first indicator having a third state changed from the second state due to the overlapping, the second indicator having a state changed due to the overlapping, and/or text information for indicating that a message can be transmitted to the satellite.

According to an embodiment, based on identifying the second indicator (703, 705, 715, 725, 735, 803, 813, 823, 1003, 1013, 1023) overlapping the first indicator (701, 801, 811, 821, 1001, 1011, 1021) on the screen displayed through the display 320, the processor 310 may be configured to change the state of the first indicator (701, 801, 811, 821, 1001, 1011, 1021) and the state of the second indicator (703, 705, 715, 725, 735, 803, 813, 823, 1003, 1013, 1023).

According to an example embodiment, the processor 310 may be configured to, based on the execution of the application, obtain the location information of a first satellite, the location information of a second satellite, the location information of the electronic device 101, and the direction information of the electronic device 101. The processor 310 may be configured to differently display, on the display 320, the first indicator (701, 801, 811, 821, 1001, 1011, 1021) identified based on the direction information of the first satellite and the direction information of the electronic device 101 according to the location information of the electronic device 101 and the location information of the first satellite, and a third indicator identified based on the direction information of the second satellite and the direction information of the electronic device 101 according to the location information of the electronic device 101 and the location information of the second satellite.

According to an embodiment, the electronic device 101 may further comprise an antenna. A distance between the antenna and the satellite in case where the first indicator (701, 801, 811, 821, 1001, 1011, 1021) and the second indicator (703, 705, 715, 725, 735, 803, 813, 823, 1003, 1013, 1023) overlap each other on the screen may be less than a distance between the antenna and the satellite in case where the first indicator (701, 801, 811, 821, 1001, 1011, 1021) and the second indicator (703, 705, 715, 725, 735, 803, 813, 823, 1003, 1013, 1023) are spaced apart from each other on the screen.

According to an embodiment, the height information of the satellite may include elevation angle information of the satellite. The distance information of the satellite may include azimuth information of the satellite. The direction information of the electronic device 101 may include elevation angle information of the electronic device 101 and azimuth information of the electronic device 101.

According to an embodiment, in order to display the first indicator (701, 801, 811, 821, 1001, 1011, 1021) on the display 320, the processor 310 may be configured to identify a position on the display 320 with respect to a first direction of the first indicator (701, 801, 811, 821, 1001, 1011, 1021), based on a difference between the azimuth information of the electronic device 101 and the azimuth information of the satellite. The processor 310 may be configured to identify a position on the display 320 with respect to a second direction perpendicular to the first direction of the first indicator (701, 801, 811, 821, 1001, 1011, 1021), based on a difference between the elevation angle information of the electronic device 101 and the elevation angle information of the satellite. The processor 310 may be configured to display the first indicator (701, 801, 811, 821, 1001, 1011, 1021) on the display 320, based on the position on the display 320 with respect to the first direction and the position on the display 320 with respect to the second direction.

According to an embodiment, in case that a difference between the azimuth information of the satellite and the azimuth information of the electronic device 101 is less than or equal to a reference angle and a difference between the elevation angle information of the satellite and the elevation angle information of the electronic device 101 is greater than the reference angle, the processor 310 may be configured to display a fourth indicator indicating a direction according to the difference between the elevation angle information of the electronic device 101 and the elevation angle information of the satellite.

The processor 310 may be configured to display a fifth indicator indicating a direction according to the difference between the azimuth information of the electronic device 101 and the azimuth information of the satellite, in case that the difference between the azimuth information of the electronic device 101 and the azimuth information of the satellite is greater than the reference angle and the difference between the elevation angle information of the electronic device 101 and the elevation angle information of the satellite is less than or equal to the reference angle.

According to an embodiment, the processor 310 may be configured to display on the display a visual object corresponding to the satellite to indicate the location of the satellite.

According to embodiments, an electronic device 101 is provided. The electronic device 101 may comprise a display 320 and a processor 310. The processor 310 may be configured to obtain, based on execution of an application for a satellite communication, location information of the satellite, location information of the electronic device 101, and angle information of the electronic device 101. The processor 310 may be configured to identify angle information of the satellite based on the location information of the electronic device 101 and the location information of the satellite. The processor 310 may be configured to, in case that a difference between the angle information of the electronic device 101 and the angle information of the satellite is out of a reference range, display a first visual object in a first state on the display 320 to indicate the location of the satellite. The processor 310 may be configured to, in case that the difference between the angle information of the electronic device and the angle information of the satellite is within the reference range, display the first visual object in a second state different from the first state on the display 320. The processor 310 may be configured to display a second visual object for guiding an angle of the electronic device 101 on the display 320. The processor 310 may be configured to identify the second visual object overlapping the first visual object due to a change in the angle of the electronic device 101. The processor 310 may be configured to, based on identifying the second visual object overlapping the first visual object, display on the display 320 information for notifying that a satellite communication is connected. The angle information of the satellite may include height information of the satellite and distance information of the satellite. The angle information of the electronic device 101 may include height information and distance information of the electronic device 101.

According to an example embodiment, the processor 310 may be configured to, based on identifying the second visual object overlapping the first visual object, change a state of the first visual object and a state of the second visual object.

According to an example embodiment, the processor 310 may be configured to, based on execution of the application, location information of a first satellite, location information of a second satellite, location information of the electronic device 101, and angle information of the electronic device 101. The processor 310 may be configured to differently display, on the display 320, the first visual object identified based on the angle information of the first satellite and the angle information of the electronic device 101 according to the location information of the electronic device 101 and the location information of the satellite, and a third visual object identified based on the angle information of the second satellite and the angle information of the electronic device 101 according to the location information of the electronic device 101 and the location information of the second satellite.

According to an example embodiment, the electronic device 101 may further comprise an antenna. A distance between the antenna and the satellite in case that the first visual object and the second visual object overlap each other on the screen is less than a distance between the antenna and the satellite in case that the first visual object and the second visual object are spaced apart from each other on the screen.

According to an example embodiment, the height information of the satellite may include elevation angle information of the satellite. The distance information of the satellite may include azimuth information of the satellite. The height information of the electronic device 101 may include the elevation angle information of the electronic device 101. The distance information of the electronic device 101 may include the azimuth information of the electronic device 101.

According to an example embodiment, the processor 310 may be configured to, for displaying the angle information of the satellite on the display 320, identify a position on the display 320 with respect to a first direction of the first visual object, based on a difference between the azimuth information of the electronic device 101 and the azimuth information of the satellite. The processor 310 may be configured to identify a position on the display 320 with respect to a second direction perpendicular to the first direction of the first visual object, based on a difference between the elevation angle information of the electronic device 101 and the elevation angle information of the satellite. The processor 310 may be configured to display the first visual object on the display 320, based on the position on the display 320 with respect to the first direction and the position on the display 320 with respect to the second direction.

According to an example embodiment, the processor 310 may be configured to, in case that a difference between the azimuth information of the satellite and the azimuth information of the electronic device 101 is less than or equal to a reference angle, and a difference between the elevation angle information of the electronic device 101 and the elevation angle information of the satellite is greater than the reference angle, display a fourth visual object indicating a direction according to the difference between the elevation angle information of the electronic device 101 and the elevation angle information of the satellite. The processor 310 may be configured to, in case that a difference between the azimuth information of the electronic device 101 and the azimuth information of the satellite is greater than the reference angle, and a difference between the elevation angle information of the electronic device 101 and the elevation angle information of the satellite is less than or equal to the reference angle, display a fifth visual object indicating a direction according to the difference between the azimuth information of the satellite and the azimuth information of the electronic device 101.

According to an example embodiment, the processor 310 may be configured to display a visual object corresponding to the satellite to indicate the location of the satellite on the display 320.

According to embodiments, a method performed by an electronic device 101 is provided. The method may comprise obtaining, based on execution of an application for transmitting a message to a satellite, location information of the satellite, location information of the electronic device 101, and direction information of the electronic device 101. The method may comprise identifying direction information of the satellite according to the location information of the electronic device 101 and the location information of the satellite. The method may comprise, in case that a difference between the direction information of the electronic device 101 and the direction information of the satellite is out of a reference range, displaying a first indicator in a first state on the display 320 to indicate the location of the satellite. The method may comprise, in case that the difference between the direction information of the electronic device and the direction information of the satellite is within the reference range, displaying the first indicator in a second state different from the first state on the display 320. The method may comprise displaying a second indicator (703, 705, 715, 725, 735, 803, 813, 823, 1003, 1013, 1023) for guiding a direction of the electronic device 101 on the display. The method may comprise identifying the second indicator (703, 705, 715, 725, 735, 803, 813, 823, 1003, 1013, 1023) overlapping the first indicator (701, 801, 811, 821, 1001, 1011, 1021) on a screen displayed through the display 320, due to a change in the direction of the electronic device 101. The method may comprise, based on identifying the second indicator (703, 705, 715, 725, 735, 803, 813, 823, 1003, 1013, 1023) overlapping the first indicator (701, 801, 811, 821, 1001, 1011, 1021) on the screen, displaying, on the display, information for notifying that a communication with the satellite is available. The direction information of the satellite may include height information and distance information of the satellite.

According to an example embodiment, the method may comprise, based on identifying the second indicator (703, 705, 715, 725, 735, 803, 813, 823, 1003, 1013, 1023) overlapping the first indicator (701, 801, 811, 821, 1001, 1011, 1021) on the screen, changing the state of the first indicator (701, 801, 811, 821, 1001, 1011, 1021) and the state of the second indicator (703, 705, 715, 725, 735, 803, 813, 823, 1003, 1013, 1023).

According to an example embodiment, the method may comprise receiving the location information of the first satellite and the location information of the second satellite via a communication circuit, based on execution of the application. The method may comprise differently displaying, on the display, the first indicator identified based on the direction information of the electronic device and the direction information of the first satellite and a third indicator identified based on the direction information of the electronic device and the direction information of the second satellite.

According to an example embodiment, the method may comprise obtaining the location information of the first satellite, the location information of the second satellite, the location information of the electronic device, and the direction information of the electronic device, based on execution of the application. The method may comprise differently displaying, on the display, the first indicator identified based on the direction information of the first satellite and the direction information of the electronic device according to the location information of the electronic device and the location information of the first satellite, and a third indicator identified based on the direction information of the electronic device and the direction information of the second satellite according to the location information of the electronic device and the location information of the second satellite. According to an embodiment, a distance between the antenna and the satellite in case where the first indicator and the second indicator overlap each other on the screen may be less than a distance between the antenna and the satellite in case where the first indicator and the second indicator are spaced apart from each other on the screen.

According to embodiments, an electronic device is provided. The electronic device comprises an antenna, memory storing instructions, a display, and at least one processor. The instructions cause, when executed by the at least one processor, the electronic device to execute an application related to a satellite, display, within a display area of the application, an antenna indicator indicating a reference range of a direction of the antenna of the electronic device, obtain azimuth angle information and elevation angle information for a relative direction of the satellite in respect to the direction of the antenna of the electronic device, display, on a horizontal position corresponding to the azimuth angle information within the display area and a vertical position corresponding to the elevation angle information within the display area, a satellite indicator indicating the relative direction of the satellite, the satellite indicator is moved with respect to the antenna indicator in accordance with change of an orientation of the electronic device. The instructions cause, when executed by the at least one processor, the electronic device to, based on identifying that the relative direction of the satellite is out of the reference range of the direction of the antenna, display a visual object for guiding the orientation of the electronic device while the satellite indicator is displayed outside the antenna indicator, based on identifying that the satellite indicator is displayed on a left side or a right side of the display area, display a visual object for indicating turn-to-left or turn-to-right while the satellite indicator is displayed outside the antenna indicator, and based on identifying that the satellite indicator is displayed on a top side or a bottom side of the display area, display a visual object for indicating tilting up or tilting down while the satellite indicator is displayed outside the antenna indicator.

According to an example embodiment, the azimuth angle information for the relative direction of the satellite is obtained using an azimuth angle of the satellite and an azimuth angle of the electronic device. The elevation angle information for the relative direction of the satellite is obtained using an elevation angle of the satellite and an elevation angle of the electronic device.

According to an example embodiment, the instructions, when executed by the processor, cause the electronic device to, based on identifying that the azimuth angle of the satellite is out of an azimuth threshold range from the azimuth angle of the antenna, and the elevation angle of the satellite is within an elevation threshold range from the elevation angle of the antenna, display the satellite indicator on the left side or the right side of the display area, and based on identifying that the azimuth angle of the satellite is within the azimuth threshold range from the azimuth angle of the antenna, the elevation angle of the satellite is out of the elevation threshold range from the elevation angle of the antenna, display the satellite indicator on the top side or the bottom side of the display area.

According to an example embodiment, the instructions, when executed by the processor, cause the electronic device to, based on identifying that the azimuth angle of the satellite is out of an azimuth threshold range from the azimuth angle of the antenna, determine the horizontal position as an end point of a horizontal axis of the display area, and based on identifying that the elevation angle of the satellite is out of an elevation threshold range from the elevation angle of the antenna, determine the vertical position as an end point of a vertical axis of the display area.

According to an example embodiment, the instructions, when executed by the processor, cause the electronic device to, based on identifying that the azimuth angle of the satellite is within an azimuth threshold range from the first azimuth angle of the antenna, determine the horizontal position according to a relative angle of the azimuth angle of the satellite from the azimuth angle of the antenna, and based on identifying that the elevation angle of the satellite is within an elevation threshold range from the elevation angle of the antenna, determine the vertical position according to a relative angle of the elevation angle of the satellite from the elevation angle of the antenna.

According to an example embodiment, the instructions, when executed by the processor, cause the electronic device to, based on identifying that the azimuth angle of the satellite is out of an azimuth threshold range from the azimuth angle of the antenna or the elevation angle of the satellite is out of an elevation threshold range from the elevation angle of the antenna, display the satellite indicator using a first visual object, and based on identifying that the azimuth angle of the satellite is within the azimuth threshold range from the azimuth angle of the antenna and the elevation angle of the satellite is within the elevation threshold range from the elevation angle of the antenna, display the satellite indicator using a second visual object different from the first visual object.

According to an example embodiment, the first visual object includes an arrow object for indicating the direction to the satellite being out of the threshold range. The second visual object does not include the arrow object.

According to an example embodiment, the electronic device further comprises at least one sensor configured to obtain a pitch value and a roll value. The instructions, when executed by the processor, cause the electronic device to, in a portrait mode of the electronic device, determine the angle of the antenna as the pitch value, and in a landscape mode of the electronic device, determine the elevation angle of the antenna as the roll value.

According to an example embodiment, the instructions, when executed by the processor, cause the electronic device to, obtain, based on the execution of the application related to the satellite, position information of the electronic device and position information of the satellite, and calculate an azimuth angle of the satellite and an elevation angle of the satellite.

According to an example embodiment, the instructions, when executed by the processor, cause the electronic device to, based on identifying that the relative direction of the satellite is within the reference range of the direction of the antenna, display information for notifying that a communication through the satellite is available while the satellite indicator is displayed at least partially within the antenna indicator.

According to an example embodiment, the instructions, when executed by the processor, cause the electronic device to display a satellite object for indicating a location of the satellite according to a first characteristic while the antenna indicator and the satellite indicator are displayed before the communication with the satellite, and while the communication with the satellite is performed, display the satellite object according to a second characteristic different from first characteristic. The satellite object is displayed to be overlapped with the satellite indicator.

According to an example embodiment, the antenna indicator is displayed at a fixed position on the display area. The antenna indicator corresponds to a circle for indicating the reference range from the direction of the antenna according to the azimuth angle of the antenna and the elevation angle of the antenna.

According to embodiments, a non-transitory computer-readable storage medium is provided. The non-transitory computer-readable storage medium stores instructions that, when executed by a processor of an electronic device, cause the electronic device to perform operations comprising, executing an application related to a satellite, displaying, within a display area of the application, an antenna indicator indicating a reference range of a direction of an antenna of the electronic device, obtaining azimuth angle information and elevation angle information for a relative direction of the satellite in respect to the direction of the antenna of the electronic device, displaying, on a horizontal position corresponding to the azimuth angle information within the display area and a vertical position corresponding to the elevation angle information within the display area, a satellite indicator indicating the relative direction of the satellite, wherein the satellite indicator is moved with respect to the antenna indicator in accordance with change of an orientation of the electronic device, based on identifying that the relative direction of the satellite is out of the reference range of the direction of the antenna, displaying a visual object for guiding the orientation of the electronic device while the satellite indicator is displayed outside the antenna indicator, based on identifying that the satellite indicator is displayed on a left side or a right side of the display area, displaying a visual object for indicating turn-to-left or turn-to-right while the satellite indicator is displayed outside the antenna indicator, and based on identifying that the satellite indicator is displayed on a top side or a bottom side of the display area, displaying a visual object for indicating tilting up or tilting down while the satellite indicator is displayed outside the antenna indicator.

According to an example embodiment, the azimuth angle information for the relative direction of the satellite is obtained using an azimuth angle of the satellite and an azimuth angle of the electronic device. The elevation angle information for the relative direction of the satellite is obtained using an elevation angle of the satellite and an elevation angle of the electronic device.

According to an example embodiment, the instructions, when executed by the processor, cause the electronic device to, based on identifying that the azimuth angle of the satellite is out of an azimuth threshold range from the azimuth angle of the antenna, and the elevation angle of the satellite is within an elevation threshold range from the elevation angle of the antenna, display the satellite indicator on the left side or the right side of the display area, and based on identifying that the azimuth angle of the satellite is within the azimuth threshold range from the azimuth angle of the antenna, the elevation angle of the satellite is out of the elevation threshold range from the elevation angle of the antenna, display the satellite indicator on the top side or the bottom side of the display area.

According to an example embodiment, the instructions, when executed by the processor, cause the electronic device to, based on identifying that the azimuth angle of the satellite is out of an azimuth threshold range from the azimuth angle of the antenna, determine the horizontal position as an end point of a horizontal axis of the display area, and based on identifying that the elevation angle of the satellite is out of an elevation threshold range from the elevation angle of the antenna, determine the vertical position as an end point of a vertical axis of the display area.

According to an example embodiment, the instructions, when executed by the processor, cause the electronic device to, based on identifying that the azimuth angle of the satellite is within the azimuth threshold range from the first azimuth angle of the antenna, determine the horizontal position according to a relative angle of the azimuth angle of the satellite from the azimuth angle of the antenna, and based on identifying that the elevation angle of the satellite is within the elevation threshold range from the elevation angle of the antenna, determine the vertical position according to a relative angle of the elevation angle of the satellite from the elevation angle of the antenna.

According to an example embodiment, the instructions, when executed by the processor, cause the electronic device to, based on identifying that the azimuth angle of the satellite is out of an azimuth threshold range from the azimuth angle of the antenna or the elevation angle of the satellite is out of an elevation threshold range from the elevation angle of the antenna, display the satellite indicator using a first visual object, and based on identifying that the azimuth angle of the satellite is within the azimuth threshold range from the azimuth angle of the antenna and the elevation angle of the satellite is within the elevation threshold range from the elevation angle of the antenna, display the satellite indicator using a second visual object different from the first visual object.

According to an example embodiment, the first visual object includes an arrow object for indicating the direction to the satellite being out of the threshold range. The second visual object does not include the arrow object.

According to embodiments, an electronic device is provided. The electronic device comprises an antenna, memory storing instructions, a display, and a processor. The instructions, when executed by the processor, cause the electronic device to, obtain, based on execution of an application related to a satellite, an azimuth angle of the satellite and an elevation angle of the satellite, display a visual object for indicating a direction of the antenna according to a first azimuth angle of the antenna and a first elevation angle of the antenna through the display, and display, while the visual object is displayed, a satellite indicator for indicating a direction to the satellite through the display, according to a first position in a first axis within a display area of the application, that is obtained using the azimuth angle of the satellite and the first azimuth angle of the antenna, and a second position in a second axis perpendicular to the first axis within the display area of the application, that is obtained using the elevation angle of the satellite and the first elevation angle of the antenna.

The electronic device according to various embodiments disclosed herein may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may be interchangeably used with other terms, for example, "logic", "logic block", "part", or "circuit". A module may be a single integral component, or a minimum unit or part thereof, adapted to perform one or more functions. For example, according to an example, the module may be implemented in a form of an application-specific integrated circuit (ASIC).

Various embodiments as set forth herein may be implemented as software (e.g., a program 140) including one or more instructions that are stored in a storage medium (e.g., an internal memory 136 or an external memory 138) that is readable by a machine (e.g., an electronic device 101). For example, a processor (e.g., a processor 120 of an electronic device 101) of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

Methods according to the various example embodiments described in the present disclosure may be implemented in the form of hardware, software, or a combination of hardware and software. When implemented as software, a computer-readable storage medium storing one or more program (software module) may be provided. The one or more program stored in the computer-readable storage medium is configured for execution by one or more processor in the electronic device. The one or more program include instructions that cause the electronic device to execute methods according to various example embodiments described in the present disclosure.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

In addition, the program may be stored in an attachable storage device that may be accessed through a communication network, such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may access a device performing an embodiment of the present disclosure.

**In** the above-described example embodiments of the present disclosure, the component included in the disclosure is expressed in singular or plural according to the presented specific embodiment. However, singular or plural expression is chosen appropriately for the situation presented for convenience of explanation, and the present disclosure is not limited to singular or plural component, and even if the component is expressed in plural, it may be configured with singular, or even if it is expressed in singular, it may be configured with plural.

According to various embodiments of the disclosure, each component (e.g., a module or a program) of the above-described components may include a single entity or multiple entities, and some of the multiple entities may be separately disposed in different components. According to various embodiments of the disclosure, one or more of the above-described components may be omitted, or one or more other components may be added. Alternatively or additionally, a plurality of components (e.g., modules or programs) may be integrated into a single component. In such a case, according to various embodiments of the disclosure, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

While the disclosure has been illustrated with reference to various example embodiments, It will be understood by those skilled in the art that various modifications are possible without departing a scope of the disclosure.

**Claims**

1. An electronic device comprising:

   an antenna;
   memory storing instructions;
   a display; and
   at least one processor,
   wherein the instructions cause, when executed by the at least one processor, the electronic device to:

   execute an application related to a satellite,
   display, within a display area of the application, an antenna indicator indicating a reference range of a direction of the antenna of the electronic device,
   obtain azimuth angle information and elevation angle information for a relative direction of the satellite in respect to the direction of the antenna of the electronic device,
   display, on a horizontal position corresponding to the azimuth angle information within the display area and a vertical position corresponding to the elevation angle information within the display area, a satellite indicator indicating the relative direction of the satellite, wherein the satellite indicator is moved with respect to the antenna indicator in accordance with change of an orientation of the electronic device,
   based on identifying that the relative direction of the satellite is out of the reference range of the direction of the antenna, display a visual object for guiding the orientation of the electronic device while the satellite indicator is displayed outside the antenna indicator,
   based on identifying that the satellite indicator is displayed on a left side or a right side of the display area, display a visual object for indicating turn-to-left or turn-to-right while the satellite indicator is displayed outside the antenna indicator, and
   based on identifying that the satellite indicator is displayed on a top side or a bottom side of the display area, display a visual object for indicating tilting up or tilting down while the satellite indicator is displayed outside the antenna indicator.

2. The electronic device of claim 1,

wherein the azimuth angle information for the relative direction of the satellite is obtained using an azimuth angle of the satellite and an azimuth angle of the electronic device, and

wherein the elevation angle information for the relative direction of the satellite is obtained using an elevation angle of the satellite and an elevation angle of the electronic device.

3. The electronic device of claim 2, wherein the instructions, when executed by the processor, cause the electronic device to:

based on identifying that the azimuth angle of the satellite is out of an azimuth threshold range from the azimuth angle of the antenna, and the elevation angle of the satellite is within an elevation threshold range from the elevation angle of the antenna, display the satellite indicator on the left side or the right side of the display area, and

based on identifying that the azimuth angle of the satellite is within the azimuth threshold range from the azimuth angle of the antenna, the elevation angle of the satellite is out of the elevation threshold range from the elevation angle of the antenna, display the satellite indicator on the top side or the bottom side of the display area.

4. The electronic device of claim 2, wherein the instructions, when executed by the processor, cause the electronic device to:

based on identifying that the azimuth angle of the satellite is out of an azimuth threshold range from the azimuth angle of the antenna, determine the horizontal position as an end point of a horizontal axis of the display area, and

based on identifying that the elevation angle of the satellite is out of an elevation threshold range from the elevation angle of the antenna, determine the vertical position as an end point of a vertical axis of the display area.

5. The electronic device of claim 2, wherein the instructions, when executed by the processor, cause the electronic device to:

based on identifying that the azimuth angle of the satellite is within an azimuth threshold range from the first azimuth angle of the antenna, determine the horizontal position according to a relative angle of the azimuth angle of the satellite from the azimuth angle of the antenna, and

based on identifying that the elevation angle of the satellite is within an elevation threshold range from the elevation angle of the antenna, determine the vertical position according to a relative angle of the elevation angle of the satellite from the elevation angle of the antenna.

6. The electronic device of claim 2, wherein the instructions, when executed by the processor, cause the electronic device to:

based on identifying that the azimuth angle of the satellite is out of an azimuth threshold range from the azimuth angle of the antenna or the elevation angle of the satellite is out of an elevation threshold range from the elevation angle of the antenna, display the satellite indicator using a first visual object, and

based on identifying that the azimuth angle of the satellite is within the azimuth threshold range from the azimuth angle of the antenna and the elevation angle of the satellite is within the elevation threshold range from the elevation angle of the antenna, display the satellite indicator using a second visual object different from the first visual object.

7. The electronic device of claim 6,

wherein the first visual object includes an arrow object for indicating the direction to the satellite being out of the threshold range, and

wherein the second visual object does not include the arrow object.

8. The electronic device of claim 2, further comprising:

at least one sensor configured to obtain a pitch value and a roll value,

wherein the instructions, when executed by the processor, cause the electronic device to:

in a portrait mode of the electronic device, determine the angle of the antenna as the pitch value, and

in a landscape mode of the electronic device, determine the elevation angle of the antenna as the roll value.

9. The electronic device of claim 2, wherein the instructions, when executed by the processor, cause the electronic device to:

> obtain, based on the execution of the application related to the satellite, position information of the electronic device and position information of the satellite, and
> calculate an azimuth angle of the satellite and an elevation angle of the satellite.

10. The electronic device of claim 1, wherein the instructions, when executed by the processor, cause the electronic device to:
based on identifying that the relative direction of the satellite is within the reference range of the direction of the antenna, display information for notifying that a communication through the satellite is available while the satellite indicator is displayed at least partially within the antenna indicator.

11. The electronic device of claim 10, wherein the instructions, when executed by the processor, cause the electronic device to:

> display a satellite object for indicating a location of the satellite according to a first characteristic while the antenna indicator and the satellite indicator are displayed before the communication with the satellite, and
> while the communication with the satellite is performed, display the satellite object according to a second characteristic different from first characteristic, and
> wherein the satellite object is displayed to be overlapped with the satellite indicator.

12. The electronic device of claim 1,

> wherein the antenna indicator is displayed at a fixed position on the display area, and
> wherein the antenna indicator corresponds to a circle for indicating the reference range from the direction of the antenna according to the azimuth angle of the antenna and the elevation angle of the antenna.

13. A non-transitory computer-readable storage medium storing instructions that, when executed by a processor of an electronic device, cause the electronic device to perform operations comprising:

> executing an application related to a satellite,
> displaying, within a display area of the application, an antenna indicator indicating a reference range of a direction of an antenna of the electronic device,
> obtaining azimuth angle information and elevation angle information for a relative direction of the satellite in respect to the direction of the antenna of the electronic device,
> displaying, on a horizontal position corresponding to the azimuth angle information within the display area and a vertical position corresponding to the elevation angle information within the display area, a satellite indicator indicating the relative direction of the satellite, wherein the satellite indicator is moved with respect to the antenna indicator in accordance with change of an orientation of the electronic device,
> based on identifying that the relative direction of the satellite is out of the reference range of the direction of the antenna, displaying a visual object for guiding the orientation of the electronic device while the satellite indicator is displayed outside the antenna indicator,
> based on identifying that the satellite indicator is displayed on a left side or a right side of the display area, displaying a visual object for indicating turn-to-left or turn-to-right while the satellite indicator is displayed outside the antenna indicator, and
> based on identifying that the satellite indicator is displayed on a top side or a bottom side of the display area, displaying a visual object for indicating tilting up or tilting down while the satellite indicator is displayed outside the antenna indicator.

14. The non-transitory computer-readable storage medium of claim 13,

> wherein the azimuth angle information for the relative direction of the satellite is obtained using an azimuth angle of the satellite and an azimuth angle of the electronic device, and
> wherein the elevation angle information for the relative direction of the satellite is obtained using an elevation angle of the satellite and an elevation angle of the electronic device.

15. An electronic device comprising:

an antenna;

memory storing instructions;

a display; and

a processor,

wherein the instructions, when executed by the processor, cause the electronic device to:

obtain, based on execution of an application related to a satellite, an azimuth angle of the satellite and an elevation angle of the satellite,

display a visual object for indicating a direction of the antenna according to a first azimuth angle of the antenna and a first elevation angle of the antenna through the display; and

display, while the visual object is displayed, a satellite indicator for indicating a direction to the satellite through the display, according to:

a first position in a first axis within a display area of the application, that is obtained using the azimuth angle of the satellite and the first azimuth angle of the antenna, and

a second position in a second axis perpendicular to the first axis within the display area of the application, that is obtained using the elevation angle of the satellite and the first elevation angle of the antenna.

100

**ELECTRONIC DEVICE 101**

INPUT MODULE 150

SOUND OUTPUT MODULE 155

DISPLAY MODULE 160

**MEMORY 130**
VOLATILE MEMORY 132
NON-VOLATILE MEMORY 134
INTERNAL MEMORY 136
EXTERNAL MEMORY 138

BATTERY 189

**PROCESSOR 120**
MAIN PROCESSOR 121
AUXILIARY PROCESSOR 123

POWER MANAGE-MENT MODULE 188

**COMMUNICATION MODULE 190**
WIRELESS COMMUNICATION MODULE 192
WIRED COMMUNICATION MODULE 194

SUBSCRIBER IDENTIFICATION MODULE 196

ANTENNA MODULE 197

AUDIO MODULE 170

SENSOR MODULE 176

HAPTIC MODULE 179

CAMERA MODULE 180

INTERFACE 177

CONNECTING TERMINAL 178

**PROGRAM 140**
APPLICATION 146
MIDDLEWARE 144
OPERATING SYSTEM 142

SECOND NETWORK 199

ELECTRONIC DEVICE 104

FIRST NETWORK 198

ELECTRONIC DEVICE 102

SERVER 108

FIG. 1

FIG. 2A

FIG. 2B

**Screen 250:**
12:45 SOS 100%
Move your phone align satellite in a circle sending messages...
Quit

**Screen 260:**
12:45 SOS 100%
To improve your signal, Center the circle
Message sent!
Quit

**Screen 270:**
12:45 SOS 100%
Maintain position to send and receive
Message sent!
Quit

**Screen 280:**
12:45 SOS 100%
Retry pointing to the another satellite
Message sent!
Quit

FIG. 2C

FIG. 3

12:45  SOS 100%

Move your phone align
satellite in a circle
sending messages...

Quit

101
411
413
415
417
419

403
405
401
409
407
N

FIG. 4

FIG. 5

403    101

FIG. 6

FIG. 7

800

805

801

803

12:45  SOS 100%

Move up to face the satellite
sending messages...
807

SHOW MESSAGE

Quit
711

810

805

811

813

12:45  SOS 100%

Turn left to face the satellite
sending messages...
817

SHOW MESSAGE

Quit
711

820

821

805

823

12:45  SOS 100%

Move your phone along
the satellite
sending messages...
827

SHOW MESSAGE

Quit
711

y

x

FIG. 8

FIG. 9

FIG. 10

FIG. 11

FIG. 12

FIG. 13

First Indicator Examples

| | First State | Second State | Third State |
|---|---|---|---|
| 1400 | 1401 | 1403 | 1405 |
| 1410 | 1411 | 1413 | 1415 |

FIG. 14

403

101

SATELLITE

ELECTRONIC DEVICE

1501
EXECUTE SATELLITE
COMMUNICATION APPLICATION

1503 SATELLITE COMMUNICATION REQUEST SIGNAL

SATELLITE LOCATION INFORMATION
1505

1507
IDENTIFY LOCATION INFORMATION
OF ELECTRONIC DEVICE

1509
DISPLAY FIRST INDICATOR AND
SECOND INDICATOR

1511
IDENTIFY SECOND INDICATOR
OVERLAPPED WITH FIRST INDICATOR

1513 EMERGENCY RESCUE MESSAGE

FIG. 15

EXECUTE APPLICATION FOR TRANSMITTING MESSAGE TO SATELLITE — 1601

OBTAIN LOCATION INFORMATION OF SATELLITE, AND LOCATION INFORMATION AND DIRECTION INFORMATION OF ELECTRONIC DEVICE — 1603

1604
IS DIRECTION INFORMATION OF SATELLITE WITHIN REFERENCE RANGE?

NO → 1605 DISPLAY FIRST INDICATOR IN FIRST STATE

YES

1606 DISPLAY FIRST INDICATOR IN SECOND STATE

DISPLAY SECOND INDICATOR ON DISPLAY — 1607

IDENTIFY SECOND INDICATOR OVERLAPPED WITH FIRST INDICATOR ON DISPLAY — 1609

DISPLAY ON DISPLAY VISUAL OBJECT FOR INDICATING THAT MESSAGE CAN BE TRANSMITTED TO SATELLITE — 1611

FIG. 16

FIG. 17

## INTERNATIONAL SEARCH REPORT

| | International application No. |
|---|---|
| | **PCT/KR2024/000566** |

| | | |
|---|---|---|
| **A.** | **CLASSIFICATION OF SUBJECT MATTER** | |

**H04W 4/02**(2009.01)i; **H04W 64/00**(2009.01)i; **H04W 76/10**(2018.01)i; **G01S 19/13**(2010.01)i; **H04W 84/06**(2009.01)i; **G01B 21/22**(2006.01)i

According to International Patent Classification (IPC) or to both national classification and IPC

| **B.** | **FIELDS SEARCHED** |
|---|---|

Minimum documentation searched (classification system followed by classification symbols)

H04W 4/02(2009.01); G01S 5/14(2006.01); G06F 3/00(2006.01); H04B 1/16(2006.01); H04B 7/15(2006.01); H04N 17/00(2006.01); H04N 21/47(2011.01); H04N 7/20(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: satellite, application, display, indicator, antenna, direction, azimuth, longitude, latitude, indicator, vertical, horizontal, object, angle, tilt, arrow

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2000-040990 A (GLOBALSTAR L.P.) 08 February 2000 (2000-02-08)<br>See paragraphs [0022]-[0051]; and figures 1-12. | 15 |
| Y | | 1-14 |
| Y | US 2008-0163057 A1 (LOHI, Hannu et al.) 03 July 2008 (2008-07-03)<br>See paragraphs [0025]-[0029]; and figures 1b-2. | 1-14 |
| A | JP 09-015317 A (SONY CORP.) 17 January 1997 (1997-01-17)<br>See paragraphs [0013]-[0030]; and figures 1-5. | 1-15 |
| A | JP 2010-239539 A (MASPRO DENKOH CORP.) 21 October 2010 (2010-10-21)<br>See paragraphs [0018]-[0040]; and figure 4. | 1-15 |
| A | KR 10-2006-0025322 A (SAMSUNG ELECTRONICS CO., LTD.) 21 March 2006 (2006-03-21)<br>See claims 1-12; and figures 1-5. | 1-15 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 April 2024** | **26 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/000566**

| Patent document cited in search report | | | Publication date (day/month/year) | Patent family member(s) | | | Publication date (day/month/year) |
|---|---|---|---|---|---|---|---|
| JP | 2000-040990 | A | 08 February 2000 | AU | 7398596 | A | 11 June 1997 |
| | | | | CA | 2187831 | A1 | 18 May 1997 |
| | | | | CA | 2271642 | A1 | 03 December 1999 |
| | | | | CN | 1155192 | A | 23 July 1997 |
| | | | | EP | 0774843 | A2 | 21 May 1997 |
| | | | | EP | 0774843 | A3 | 07 January 1998 |
| | | | | EP | 0963061 | A2 | 08 December 1999 |
| | | | | EP | 0963061 | A3 | 21 November 2001 |
| | | | | KR | 10-1997-0031453 | A | 26 June 1997 |
| | | | | RU | 99111947 | A | 20 May 2001 |
| | | | | US | 6272316 | B1 | 07 August 2001 |
| | | | | WO | 97-19524 | A1 | 29 May 1997 |
| US | 2008-0163057 | A1 | 03 July 2008 | EP | 1875165 | A1 | 09 January 2008 |
| | | | | FI | 117576 | B | 30 November 2006 |
| | | | | FI | 20055204 | A0 | 29 April 2005 |
| | | | | WO | 2006-117437 | A1 | 09 November 2006 |
| JP | 09-015317 | A | 17 January 1997 | None | | | |
| JP | 2010-239539 | A | 21 October 2010 | JP | 5384985 | B2 | 08 January 2014 |
| | | | | WO | 2010-114065 | A1 | 07 October 2010 |
| KR | 10-2006-0025322 | A | 21 March 2006 | CN | 1758728 | A | 12 April 2006 |
| | | | | EP | 1638227 | A2 | 22 March 2006 |
| | | | | JP | 2006-087066 | A | 30 March 2006 |
| | | | | JP | 4383383 | B2 | 16 December 2009 |
| | | | | KR | 10-2006-0027139 | A | 27 March 2006 |
| | | | | US | 2006-0068699 | A1 | 30 March 2006 |

Form PCT/ISA/210 (patent family annex) (July 2022)